Europäisches Patentamt

European Patent Office

Office européen des brevets

(11) Publication number: **0 424 711 A2**

# EUROPEAN PATENT APPLICATION

(21) Application number: 90119189.0

(51) Int. Cl.5: **C05F 17/02**

(22) Date of filing: 05.10.90

(30) Priority: 07.10.89 JP 262807/89
05.06.90 JP 146730/90

(43) Date of publication of application:
02.05.91 Bulletin 91/18

(84) Designated Contracting States:
AT BE CH DE DK ES FR GB GR IT LI LU NL SE

(71) Applicant: KISHI ENGINIARINGU KABUSHIKI KAISHA
2-224, Ohaza Kanoh
Okegawa-shi, Saitama-ken(JP)

(72) Inventor: Kishi, Iwao
6-8, Nishi 2-chome
Okegawa-shi, Saitama-ken(JP)

(74) Representative: Schmidt-Evers, Jürgen,
Dipl.-Ing. et al
Patentanwälte Mitscherlich, Gunschmann
Dr. Körber, Schmidt-Evers, Melzer, Dr. Schulz
Steinsdorfstrasse 10
W-8000 München 22(DE)

(54) **Fermentative treatment apparatus and carrier device therefor.**

(57) The present invention relates to a fermentative treatment apparatus for fermentative treatment of organic wastes such excrements and sludges and to a carrier device for such apparatus.

The fermentative treatment apparatus comprises a carrier 4 designed to extend across and over a pit (3) of an elongated fermentative treatment pen (2) and positioned so as to be able to travel back and forth in the lengthwise direction of the pit, an agitation device (11) so attached thereto as to take up one half portion thereof corresponding to one widthwise half portion of the pit (3) and an organic waste spreader device 12 so attached thereto as to take up another half portion thereof corresponding to the other widthwise half portion of the pit, both devices (11) and (12) being arranged to be turned by 180° at each of both ends of the travel. Thus, agitation and spreading of the organic wastes are performed simultaneously and alternately for each of one widthwise half portion of the pit (3) and the other half portion thereof with forward and rearward travels of the carrier (4), thereby improving the efficiency of the treatment process performed as the carrier travels back and forth.

In addition, a deodorization device 30 including a hood (32) and a suction device (35) is provided before or after where the agitation device (11) and the spreader device (12) are provided, so as to suck thereinto offensive odors emitted from the accumulated layer of excrements undergoing fermentation when agitated and thus remove them, thereby improving the working environment.

The enclosing frame base (4a) of the carrier 4 is made broad enough to extend over and beyond pit walls (2a), (2a) on both sides of the pit and provided with supporting legs (5) having wheels (5a) attached thereto so that the carrier (4) can be placed on the floor surfaces outside of the pit walls (2a), (2a) and thus travel along said pit walls (2a), (2a). This eliminates use of the costly ferro-concrete pit walls which has been indispensable to the conventional apparatus wherein the carrier is mounted on the pit walls (2a), (2a) to travel therealong, and consequently makes it possible to construct them with less cost.

The carrier device for the fermentative treatment apparatus comprises the carrier (4) having an enclosing frame base (4a) provided with a plurality of driving wheels (40) disposed thereon circumferentially, and a circular supporting base (41) whose circumferential portion (41a) is mounted on the driving wheels (40) and which supports at least the agitation device (11). Arranged as above, it is free from slipping while travelling, said slipping seen heretofore with the conventional carrier device in which a rotatable frame is so mounted as to be rotatable via wheels on and along a circular track

fixedly attached to the enclosing frame base and mud-like substances tend to be deposited on the track to cause slipping. Further, a chain-sprocket drive system employed for driving of the circular supporting base 41 assures a powerful rotational movement of the circular supporting base 41.

Further, the circumferential portion (41a) of the circular supporting base (41) is provided with plural guide wheels (99) contacted therewith, it can prevent the circular supporting frame from deviating in the horizontal direction, while rotated.

# FIG. 1

## FERMENTATIVE TREATMENT APPARATUS AND CARRIER DEVICE THEREFOR

### BACKGROUND OF THE INVENTION:

This invention relates to a fermentative treatment apparatus for organic wastes such as excrements and sludges and to a carrier device for the apparatus.

There has been known heretofore an apparatus of this kind which is designed to comprise a carrier with an agitation device attached thereto and another carrier with a raw feces spreader device attached thereto, both carriers coupled to each other in a one-behind-the-other relation by a coupler for carrying out efficiently and mechanically a fermentative treatment of excrements and in which domestic animal excrements such as those of cattle, horses, pigs, etc. are evenly dispersed and accumulated in a fermentative treatment pen, fermented with aerobic bacteria and, from time to time, agitated for uniform fermentation, penetration thereinto of air and removal of water content therefrom, thereby ultimately producing a dried and ripened compost or manure. To be more specific, the apparatus is used as follows. Namely, the carriers coupled to each other are so mounted on the inner and outer pit walls on both sides of a pit in the fermentative treatment pen as to span the pit and move along a rail laid at least on the inner pit wall thereof there to be engaged with at least the inner ones of inner and outer wheels of the carriers for a go-round traveling in a fermentative treatment pen, and the spreading and agitation operations of the raw feces or excrements performed simultaneously or alternately while the carriers are so moving are repeated as desired until the excrements accumulated to a predetermined depth have ripened sufficiently and ultimately become suitable for use as a compost.

In lieu of the foregoing go-round type fermentative excrements treatment pen, there has been proposed by and known from, for example, Japanese Utility Model Registration Applications Jikkaisho Nos. 59-181841 and 61-164995 an elongated rectangular fermentative excrements treatment pen designed to do the job with a pit thereof halved in width, wherein a fermentative treatment apparatus designed to be suitable for back-and-forth or reciprocating movement in the longitudinal direction along the top-side surface of the pit of the fermentative excrements treatment pen comprises a carrier, a circular track fixedly attached to the carrier, a square frame rotatable along the circular track, and an agitator so attached fixedly to the square frame as to take up one portion thereof corresponding to one widthwise half portion of the pit. This fermentative excrements treatment apparatus comprises a carrier device that travels back and forth on and along rails laid on both side walls of the pen running in the longitudinal direction, and said carrier device constructed as described in the following. Namely, it comprises a carrier having an enclosing frame base provided with travel wheels on both sides thereof and further having a circular track laid thereon, and an agitating device attached to a rotary amount which is so mounted on the circular track as to rotate therealong via its wheels on the track. To be more specific, this carrier device is, as mentioned in the foregoing, mounted on the parallel rails laid on the top surfaces of both side walls of the fermentative treatment pen by having its carrier mounted on said rails, and operated to travel back and forth therealong. When it has reached the starting or final end of both side walls, the carrier is stopped by means of a limit switch and then the rotary mount on the carrier is rotated on and along the circular track fixedly attached to the carrier to make a 180° turn thereby reversing the direction of the agitation device. The back-and-forth or reciprocating travel of the cirrier device and the 180° turn performed as above are repeated and, during the forward and rearward travels, an accumulated layer of mixture of feces and urine is agitated by the agitation device to improve the aerobic fermentation condition thereof and allowed to undergo decomposition of the mixture and evaporation of the water content thereof through the exothermic fermentation for any required length of time, thereby producing a compost which is an adequately dried product of the decomposed mixture.

The former of the foregoing fermentative excrements treatment apparatus is of the type that the raw feces spreader device mounted on one of the carriers and the agitation device attached to the other of the carriers are disposed and coupled to each other in a one-behind-the-other relation as the carriers are coupled to each other that way. Therefore, it is not only comparatively difficult to inspect and service the same but also subject to the following disadvantages that when the agitation device is operating the feces and urine are scattered to cling to the driving motor, chain and other parts of the raw feces or excrements spreader device, and furthermore these component units are directly exposed to what is referred to hereinafter as "gas mist" which is mainly composed of water vapor originally contained in the accumulated layer of excrements and in addition, various other gases including such offensive-odor and/or corrosive gases as ammonia, mercaptan, hydrogen sulfide, etc.

formed through fermentative decomposition of the accumulated layer of excrements and rising therefrom when agitated and, as a result, corrosion of the component units become accelerated and their service lives shortened. As for the latter of the foregoing fermentative excrements treatment appratus, with every forward or rearward travel of the apparatus, only one half the width of the pit or the pen is given agitation while the other half remains untouched since the agitator is attached to one widthwise half portion of the carrier. This half-width agitation is obviously less advantageous in terms of operational economy.

Furthermore, with either of the foregoing two types of the fermentative excrements treatment apparatus, it is inevitable that the accumulated layer of excrements undergoing fermentation and therefore giving a high temperature is agitated with the agitation operation of the apparatus and as a result the gas mist is diffused then into the indoor space in which the fermentative excrements treatment pen is accomodated and thus worsens the working environment to adversely affect the workers' hygiene and lower the work efficiency while corroding various devices and equipment installed indoors, all these being notable disadvantages. In addition, since there is no choice but to carry out maintenance works for the fermentative excrements treatment apparatus including inspections, cleaning and repairs thereof right above the fermentative treatment pen where offensive odors always prevail, it is extremely inconvenient and difficult to carry out such works for the apparatus under such conditions.

Another disadvantage with either of the foregoing conventional fermentative excrements treatment apparatus is that either one of them is such that its carrier travels on and along the pit walls of the fermentative treatment pen and therefore the pit walls on both sides of the pen have to be constructed of a thick and strong concrete wall structure. This makes the wall construction difficult and increases the construction cost. It is therefore much desired to make available a pit wall which can be constructed easily, speedily and economically.

It is also desirable that the afore-mentioned maintenance works for the fermentative excrements treatment apparatus may be carried out more conveniently and easily.

In addition, there is the following disadvantage with the carrier device of the foregoing fermentative treatment apparatus in that the circular track becomes contaminated with dust deposited thereon and then wetted with a slippery mud-like stuff formed of the dust and water drops condensed on the ceiling of the building which houses the treatment facilities and falling onto the circular track and, as a result, when the rotary mount is operated to rotate on and along the circular track in subsequent operations of the carrier device, the wheels of the rotary mount slip, failing to make the required $180°$ turn.

## 4. OBJECT AND SUMMARY OF THE INVENTION:

The present invention is to provide a fermentative treatment apparatus for organic wastes such as excrements and sludges, which has gotten rid of the foregoing inconveniences or disadvantages experienced with the conventional types and which is characterized in that it comprises a a carrier provided with an enclosing frame base and so mounted as to span a pit of an elongated fermentative treatment pen and travel back and forth in the longitudinal direction of the pen, a frame so mounted on the enclosing frame base of the carrier as to be rotatable, an agitation device so attached to the frame as to take a position corresponding to one widthwise half portion of the pit and a spreader device for organic wastes such as excrements and sludges so attached to the frame alongside of the agitation device as to take a position corresponding to the other widthwise half portion of the pit.

Further, the second aspect of the present invention is to provide a fermentative treatment apparatus for organic wastes such as excrements and sludges, comprising the carrier provided with the enclosing frame base and so mounted as to travel on and along the pit of the elongated fermentative treatment pen, the rotatable frame so mounted on the enclosing frame base of the carrier as to be rotatable thereon, the agitation device so attached to the frame as to take a position corresponding to one widthwise half portion of the pit and the raw feces or excrements spreader device so attached to the frame, alongside of the agitation device on the frame, as to take another position corresponding to the other widthwise half portion of the pit, characterized in that a deodorization device is additionally provided before or after where the agitation device and the spreader device are provided side by side.

Furthermore, another or the third aspect of the present invention concerns the foregoing treatment apparatus designed according to the first and the second aspects of the present invention and provides one variation thereof characterized in that the carrier is designed to comprise a base frame broad enough to extend over and beyond the pit walls located along both sides of the longitudinal fermentative treatment pen and supporting legs attached to the front left and right and the rear left and right side portions of the base frame and that wheels attached to the front left and right and the rear left and right supporting legs are so arranged as to be placed on the surfaces of floor located outside of the pit walls of the fermentative treatment pen and the carrier is thus operated to travel back and forth along both the pit walls.

In the foregoing treatment apparatus according to the first aspect of the present invention described above earlier, whether it is in the forward or the rearward travel, agitation of the accumulated layer of the organic waste materials such as excrements and spreading of such organic waste materials are performed in parallel and simultaneously, and a 180° turn is made at the end of each forward or rearward travel to reverse the travel direction, thereby repeating the forward and rearward travels to apply the agitation and the spreading alternately to each widthwise half portion of the pit as the carrier moves back and forth, so that a uniform and good fermentative treatment of the whole excrements can be carrier out. Moreover, it never occurs with the apparatus that the raw feces spreader device located alongside of the agitation device is directly exposed to the gas mist rising with the agitation operation of the agitation device because of its location.

In the fermentative treatment apparatus according to the second aspect of the present invnetion, the gas mist emitted with agitation by the agitation device of the accumulated layer of the waste materials is sucked into and arrested by the deodorization device additionally provided before or after where the agitation device and the spreader device are provided.

Furthermore, according to the third aspect of the present invention, it is so designed that the pit walls located on both sides of the fermentative treatment pen have nothing to do with bearing the weight of the carrier equipped with the various devices mentioned above. This makes it possible to use the pit walls of a wooden boarding material or the like which can be thus constructed very easily and economically and further eases weight limitations of the various devices and equipment to be mounted on the carrier. In addition, the carrier can be moved to the foremost or rearmost end of the pen for maintenance work thereof, so that it is more convenient and eassier to carry out the work.

Still another or the fourth aspect of the present invention is to provide for a fermentative treatment apparatus a carrier device which no longer uses a rotary mount and thus has solved the slipping problem observed with the foregoing conventional carrier device for the fermentative treatment apparatus when the rotary mount thereof is rotated and which is of a simpler construction that can be constructed easily with comparatively low cost and yet enables the reversal of the agitation device to be carried out without failure. This carrier device is characterized in that it comprises a carrier comprising an enclosing frame base provided with travel wheels disposed on both sides thereof and further provided with a plurality of driving wheels disposed circumferentially on the inner space thereof, and a circular supporting base used to support at least an agitation device and so positioned as to have the circumferential portion thereof mounted on the foregoing driving wheels disposed circumferentially.

According to the fourth aspect of the present invention, the circular supporting base of the carrier device for the fermentative treatment apparatus is supported at the underside surface of the circumferential portion thereof by said plurality of the driving wheels disposed circumferentially, so that the underside surface of the circular supporting base and the wheels supporting the same are completely protected from the dust deposit and the water drops falling from the ceiling and as a result there is always maintained a good frictional contact between the underside surface of the circular supporting base and the driving wheels to enable the driving wheels to assure slipless rotation of the circular supporting base. In addition, the load for bearing the circular supporting base is shared by said plurality of the driving wheels so that a comparatively small driving motor will do for driving each wheel and the stable rotation of the circular supporting base can be assured.

The characteristic features of other arrangements according to the present invention and the effects thereof will become evident from description thereof which are to follow hereinafter.

## 5. BRIEF DESCRIPTION OF THE DRAWINGS

Fig. 1 is a top plan view of excrements treatment facilities with a portion broken away, wherein the fermentative treatment apparatus according to one embodiment example of the present invention is provided on a pit in a fermentative excrement treatment pen installed in an excrements treatment room.

Fig. 2 is a side view of important portions thereof as seen from one side thereof.

Fig. 3 is a side view of said important portions as seen from the other side thereof.

Fig. 4 is an elevational view of said important portions as seen from the front side thereof.

Fig. 5 is an elevational view of said important portions as seen from the rear side thereof.

Fig. 6 is a top plan view of the apparatus of the present invention while in operation.

Fig. 7 is a top plan view of a rotatable frame.

Fig. 8 is a cross-sectional view of a variation, with a portion thereof omitted, of the apparatus of the present invention.

Fig. 9 is a sectional view of a deodoriztion device, taken along the line IX-IX of Fig. 1.

Fig. 10 is a sectional view taken along the line X-X of Fig. 9.

Fig. 11 is a sectional view taken along the line XI-XI of Fig. 9.

Fig. 12A is a top plan view of a carrier employed in a carrier device for a fermentative treatment device according to one embodiment example of another aspect of the present invention.

Fig. 12B is a top plan view of a circular supporting base.

Fig. 13 is a side view of the carrier.

Fig. 14 is a top plan view of a carrier device for a fermentative treatment apparatus according to one embodiment example of the present invention.

Fig. 15 is a front elevational view of the fermentative treatment apparatus comprising the carrier device arranged to be provided on the fermentative treatment pen according to one embodiment example of the present invention.

Fig. 16 is a rear elevational view thereof.

Fig. 17 is a right side view thereof.

Fig. 18 is a left side view thereof.

Fig. 19 is a sectional view taken along the line XIX-XIX of Fig. 14.

Fig. 20 is a sectional view taken along the line XX-XX of Fig. 14.

Fig. 21 is a top plan view of the fermentative treatment apparatus with portions thereof broken away.

Fig. 22 is a schematic top plan view of the above fermentative treatment apparatus illustrating the operation mechanism thereof.

Fig. 23 is a side view of a part of the side wall of the fermentative treatment pen according to one embodiment example of the present invention.

Fig. 24 is a top plan view thereof.

Figs. 25 through 30 show a variation of the carrier device according to the present invention, of which:

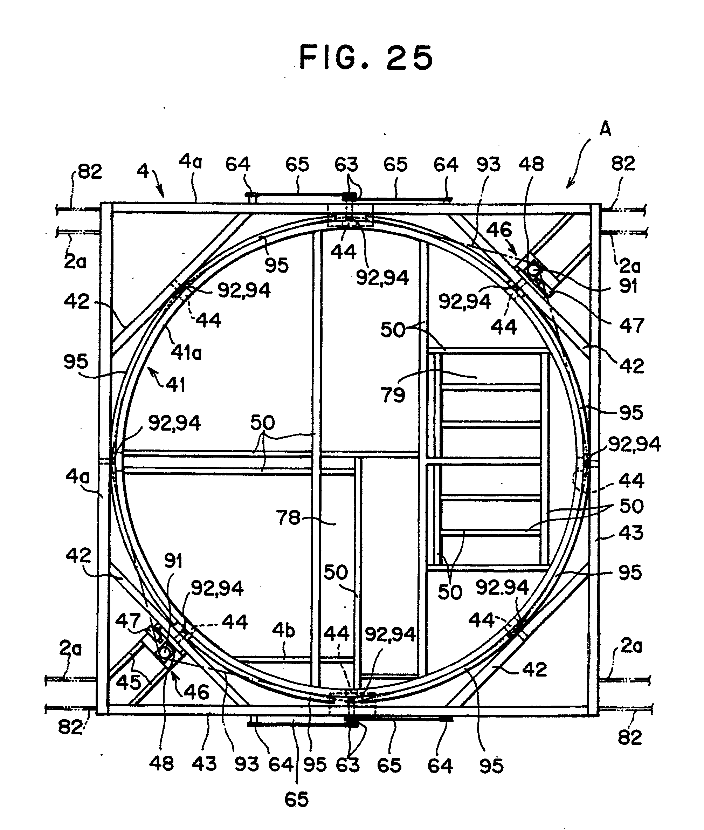

Fig. 25 is a top plan view thereof;

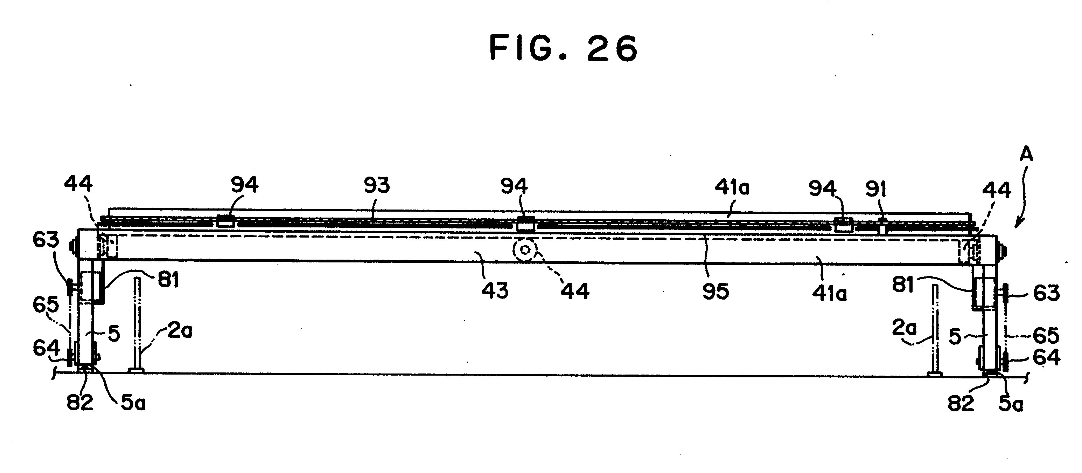

Fig. 26 is a side view thereof;

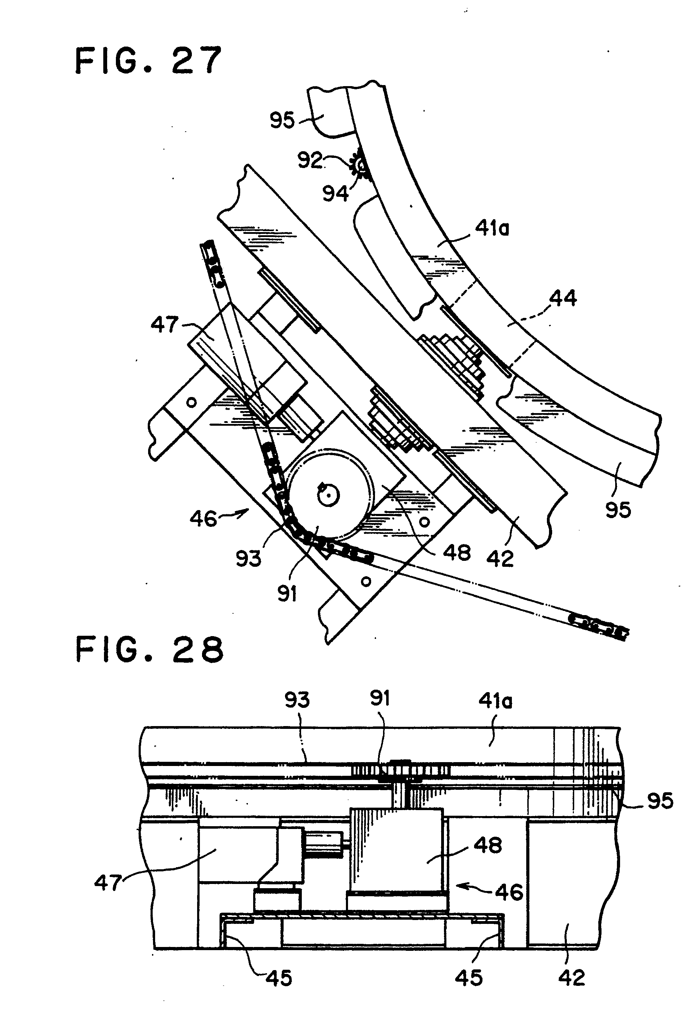

Fig. 27 is an enlarged top plan view of a driving gear portion thereof;

Fig. 28 is an enlarged side view of said driving gear portion;

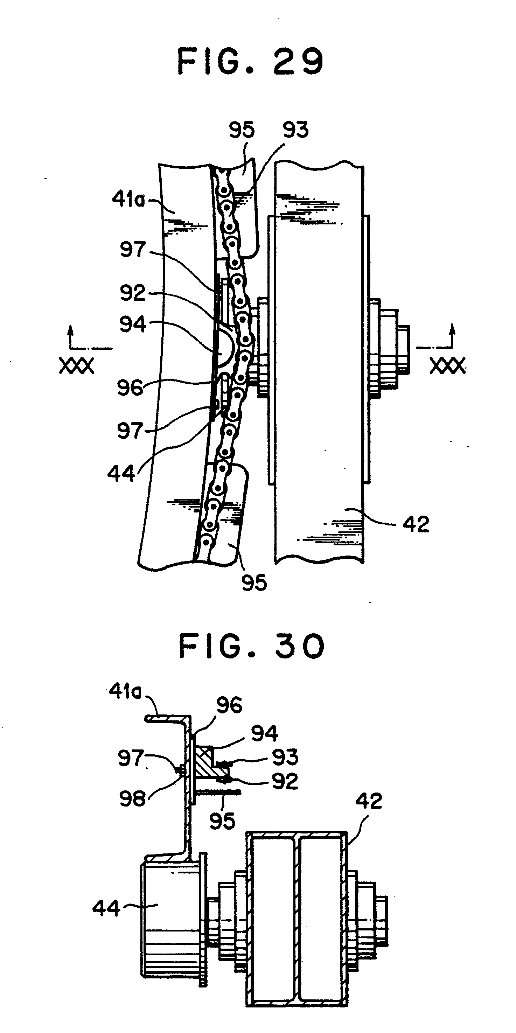

Fig. 29 is an enlarged top plan view of a portion of a circular supporting base provided with teeth for engagement with the chain shown in Fig. 26; and

Fig. 30 is a sectional view taken along the line XXX-XXX of Fig. 29;

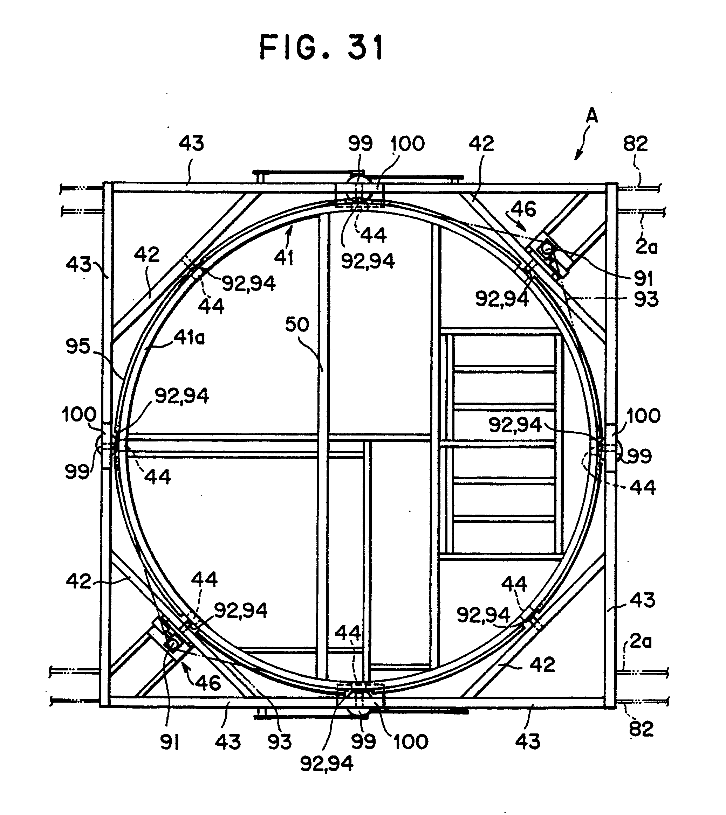

Figs. 31 through 34 show another embodiment example of the carrier device according to the present invention, of which:

Fig. 31 is a top plan view thereof;

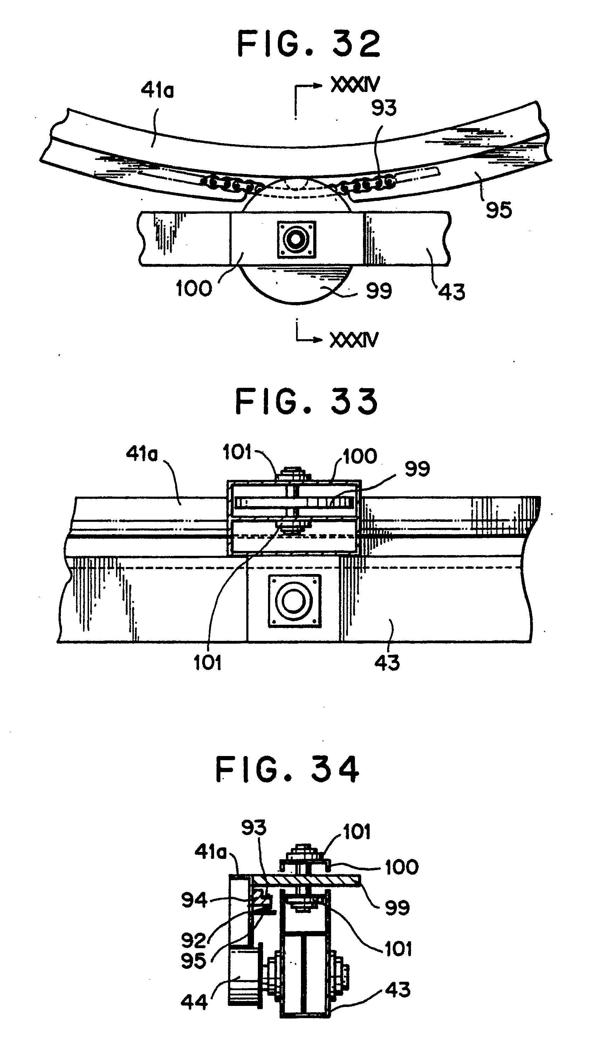

Fig. 32 is a top plan view of the guide wheel portion thereof;

Fig. 33 is a side view thereof; and

Fig. 34 is a sectional view taken along the line XXXIV-XXXIV of Fig. 32.

## 6. DETAILED DESCRIPTION OF PREFERRED EMBODIMENT:

One preferred example of embodiment of the present invention will now be explained with reference to the accompanying drawings.

It should be noted that the preferred embodiment example is explained hereunder by taking up a fermentative excrements treatment apparatus designed according to the present invention especially for fermentative treatment of raw excrements such as raw feces and urine.

In the drawings, 1 denotes a fermentative treatment apparatus embodied as one example of the present invention, said fermentative treatment apparatus arranged so as to be laid across the top side of a pit 3 of an elongated rectangular fermentative treatment pen 2 for treatment of such organic waste materials as excrements or sludges and to travel freely back and forth in the longitudinal direction of the pit 3. In reference to the fermentative treatment pen 2, when the above mentioned fermentative treatment apparatus with the carrier 4 is mounted, via the wheels of the carrier 4, on pit walls 2a, 2a located on both sides of the pit and the pit walls are then provided with rails on the top sides thereof and thus used as supporting walls for the apparatus as in the case of a conventional one, it is necessary to construct the walls of a usual thick concrete structure. However, as shown in the preferred embodiment example in particular, the fermentative treatment apparatus of the present invention is arranged such that a square-shaped frame base 4a of the square-shaped carrier 4 thereof is made so broad as to extend over and beyond the two pit walls 2a, 2a and supporting legs 5, 5, one pair of which are provided at the front portion of the apparatus and other pair at the rear portion and each with one of wheels 5a, 5a, ..., are placed on the floor surface 6 of concrete floor outside of the pit walls 2a, 2a, thus permitting the apparatus to travel back and forth freely with the respective wheels 5a, 5a... on the floor along the pit walls 2a, 2a. Constructed as above, it frees the pit walls 2a, 2a from the burden of bearing thereon the fermentative treatment apparatus 1. This arrangement makes it possible to construct the pit walls 2a, 2a very easily, using a lightweight boarding such as of synthetic resin or wood, which is one of the advantages brought about by the present invention.

The fermentative treatment pen 2 is housed in an elongated building 7 roofed with transparent synthetic resin sheets, glass plates, etc.(the ceiling thereof not shown) which pass sun rays and provided with doorways 7a, 7a at the front and rear sides thereof. In the building, there is provided a working space 8 around the pen2.

To describe it more in detail, the pen 2 may come approximately in the size measuring about 0.8-1.5 meters in height and about 20 to 200 meters in length while the pit walls 2a, 2a may be erected to have a distance of about 5 to 5.5 meters therebetween.

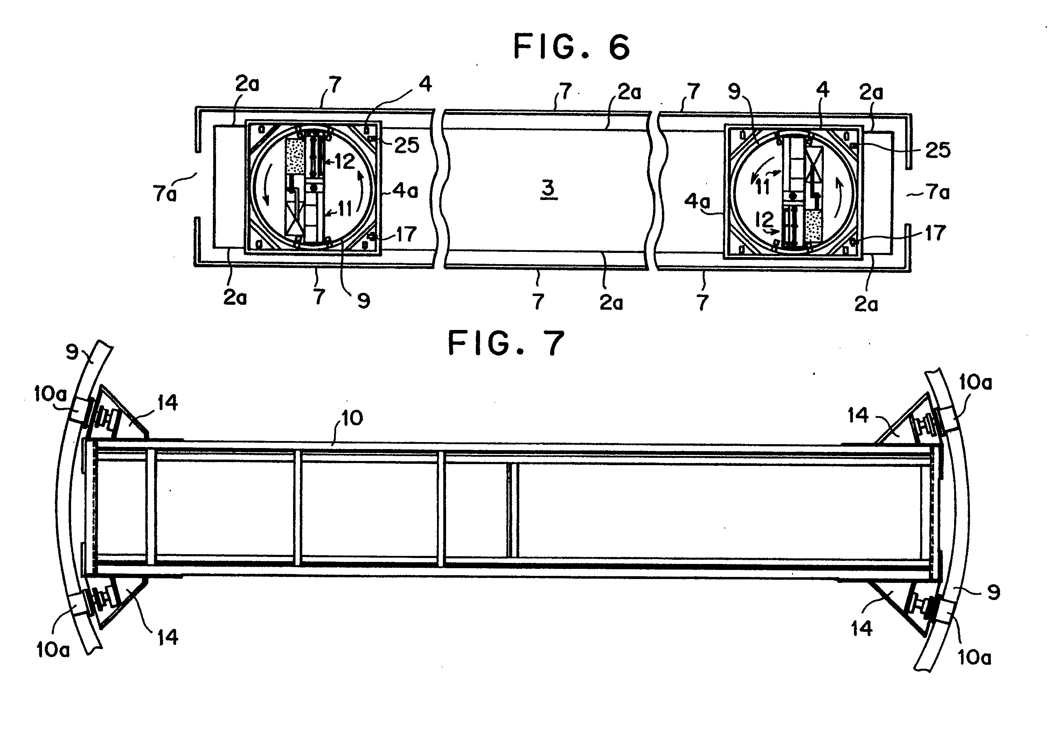

The fermentative treatment apparatus 1 comprises the afore-mentioned square frame-shaped carrier 4, a circular track 9 fixedly mounted on the carrier 4, an elongated rectangular frame 10 (see Fig. 7) which is so mounted as to be able to rotate along the circular track 7 via pairs of left and right rotating wheels 10a, 10a, 10a, 10a, one pair of which are provided at the front in the widthwise direction and the other pair at the rear, an agitation device 11 fixedly attached to the elongated rectangular frame 10 so as to take a position corresponding to one widthwise half portion of the pit 3 and a spreader device 12 attached fixedly to the rectangular frame 10 so as to take a position corresponding to the other widthwise half portion of the pit 3. In addition, the carrier 4 consisting of said square frame is equipped at the front left and right and the rear left and right portions thereof with back-and-forth travel driving gears 13, 13,... to run the foregoing front left and right and rear left and right wheels 5a, 5a,... forward and rearward, each of said driving gears comprising a driving motor and a driving belt while the rotatable rectangular frame 10 is equipped with rotary travel driving gears 14, 14, 14, 14 to drive the respective wheels 10a, 10a, 10a, 10a in the circular direction, each of said driving gears 14, 14, 14, 14 comprising a driving motor and a driving belt for the rotary movement of the wheels.

The agitation device 11 comprises a horizontal rotary type agitator 11a which is rotated by chains encased in a pair of left and right chain cases 15, 15 suspended downward from the elongated rectangular frame 10 and which is provided with a number of claws 11a disposed on the circumferential surface thereof, and a pair of vertical screw type agitators 11b disposed at the front left and right sides with respect to the horizontal rotary type agitator 11a and suspended downward from the elongated rectangular frame 10, so that a widthwise half portion of the accumulated layer of excrements heaped up in the pit 3 of the pen 2 may be agitated thereby at a time.

16 denotes a control box connected to an external power source by a cable (not shown) of a cable reel 17. Incorporated in the control box 16 are various control devices to control respectively operations of all of the back-and-forth travel driving gears 13, 13,.... the rotary travel driving gears 14, 14,..., a motor which is housed in a box provided on the top-side surface of the elongated rectangular frame 10 for driving the horizontal rotary type agitator 11a, a motor 19 provided to drive the pair of left and right vertical screw type agitators 11b, a driving motor 20 for tilting movement of a tank 12a of the spreader 12, and a driving motor 21 for agitating and scraping out the raw feces, all these controls performed through its control board.

In the drawings, 20a denotes a sprocket for tilting movement of the spreader device, 21a represents a decelerator for the motor used for the agitation/scraping-out operation of the spreader device, 22 denotes a sprocket thereof, 23 denotes a control device comprising a limit switch or a proximity switch for the forward and rearward travel operation of the carrier 4, and 24 stands for a control device comprising a limit switch or a proximity switch for the rotary travel operation of the frame 10 in which the frame travels circularly along the circular track 9. 25 denotes a control box comprising detector elements such as a proximity switch, a photoelectric switch, a limit switch, a pressure switch and so on and control elements such as electromagnetic switches and clutches which operate to control the foregoing detectors, all of which elements are provided for the purpose of preventing a meandering movement of the carrier 4 when it travels forward and rearward. 26 denotes a level. The foregoing spreader device 12 is same as one disclosed in the Japanese Utility Model Registration Application No. Jitsugan Sho 63-22157 filed earlier, but it should not be limited thereto and it goes without saying that any suitable known device for spreading of raw feces or excrements may be used in the apparatus of the present invention.

As described in the foregoing, the fermentative treatment apparatus 1 of the present invention comprises the carrier 4, the elongated rectangular frame 10 so mounted on the carrier 4 as to be rotatable, the agitation device 11 so attached to the elongated rectangular frame 10 as to take up a portion thereof corresponding to one widthwise half portion of the pit 3 of the fermentative excrements treatment pen 2 and the spreader device 12 so attached to the frame 10 as to take up another portion thereof corresponding to the other widthwise half portion of the pit 3, so that, as compared with a conventional one in which each of the agitation device 11 and the spreader device 12 is attached to a separate carrier and then the carriers are coupled to each other in a longitudinal relation by their couplers, it is of a simpler structure and, in addition, it not only makes inspections and other maintenance works thereof but also can get rid of such inconveniences as contamination and corrosion of the driving motors and other components and devices located by the side of the raw feces or excrements spreader device 12 which are caused by the scattering feces and urine and rising gas mist reaching them as they are generated when the high-temperature layer of accumulated excrements undergoing fermentation is agitated by the agitation device.

Another advantage is that, during the forward and rearward travel of the apparatus 1, agitation operation by the agitation device to agitate the accumulated layer of excrements and spreading operation by the spreader device to spread raw feces and urine can be performed simultaneously and literally in parallel. Further, the frame 10 mounted on the carrier 4 makes a 180° turn to reverse its direction when the carrier 4 travelling either in the forward or rearward direction has reached either of the predetermined end portions of the pen 2. Thus, as shown in Fig. 6, agitation of the accumulated layer of excrements for a portion thereof corresponding to one widthwise half of the pit 3 and spreading of raw excrements for another portion thereof corresponding to the other widthwise half of the pit 3 are performed alternately as the carrier travels back and forth. As a result, uniform agitation of the accumulated layer of excrements as well as uniform spreading of raw excrements is carried out across the entire width of the pit 3 with every forward and rearward travel of the carrier and repeating this operation brings about good fermentative treatment and ripening of the accumulated layer of excrements.

Now, operations for agitation of the accumulated layer of excrements and spreading of raw excrements using the fermentative treatment apparatus 1 in the foregoing embodiment example of the present invention will be explained more in detail as follows. In the middle in the building 7, after a predetermined quantity of raw excrements is put into a tiltable excrements tank 12a of the spreader device 12 from a screw conveyor, an electrical operation is switched on to start revolution of the agitation device 11 and thereafter the carrier 4 is actuated to travel forward and rearward. With the carrier 4 moving forward rearward, the tiltable excrements tank is gradually tilted by the driving motor 20 of the spreader device 12 for tilting movement while, at the same time, the driving motor for agitation and scrapingout of raw feces is operated to actuate the sprocket 22 for agitation and scraping-out of the raw feces so as to spread the raw feces little by little. At a predetermined location in the neighborhood of one end of the fermentative excrements treatment pen 2, the carrier 4 is stopped travelling by operation of the proximity switch. This is then sensed by the sensor limit switch for 180° turn, whereupon the rotary travel driving gears 14, 14 are actuated to turn the frame 10 by 180 degrees and at the same time the tilting movement of the tiltable tank 12a of the spreader device 12 is stopped. The above turning movement is stopped by means of another sensor limit switch which senses completion of the required rotation when the 180° turn has been completed, and immediately thereafter the rearward travel of the carrier is started while, at the same time, the tilting movement of the spreader device 12 is resumed to resume spreading the raw feces little by little. When the carrier 4 has reached the other predetermined stop point located in the neighborhood of the other end of the pen 2, the 180° turn of the frame 10 and the temporary stop of operation of the spreader device 12 are carried out in the same manner as stated in the foregoing. After completion of this reversal in the travel direction, the carrier 4 starts travelling forward again and at the same time the spreading of the raw feces is resumed again. Through these forward and rearward travels of the carrier 4, the agitators 11a and 11b are operated such that the horizontal rotary type agitator 11a functions to make the accumulated layer of excrements agitated across the almost entire width by a number of the claws disposed thereon while the vertical screw type agitators 11b located on the left and the right sides of the horizontal rotary type agitator 11a work to assure that portions adjacent to the pit walls 2a, 2a of the accumulated layer of excrements are also fully agitated, and it is unnecessary to stop operation of the agitation device 11 even when the carrier 4 is making the 180° turn.

The forward and rearward travel of the carrier 4 is carried out as the wheels 5a, 5a,... driven by the back-and-forth travel driving gears 13, 13,... rotate along the surface of the floor 6 and move along the outer sides of the pit walls 2a, 2a running longitudinally in parallel to each other in the pen 2. A possible meandering travel of the carrier 4 is prevented by means of the control devices provided on the left and right sides of the carrier, said devices comprising a proximity or a limit switch, so that straight travelling of the carrier can be assured at all times.

In order for these control devices not to function at the foregoing predetermined stop positions of the carrier 4, it is so designed that a sensible material is attached to each of the pit walls 2a, 2a over its lengthwise range corresponding to the straight travel range of the carrier 4 but not attached thereto on or about the near-end portions thereof corresponding to the respective stop positions of the carrier 4.

Through the reciprocating travel of the foregoing fermentative excrements treatment apparatus 1 according to the present invention, the spreading of raw feces and the agitation can be performed simultaneously and in parallel and repeated alternately between the left and the right side portions of the pit. Further, when the excrements tank 12 of the spreader device 12 becomes empty of raw feces, all the travel, agitation and raw feces spreading operations are stopped by an all-stop limit switch at the middle of the building 7. Then, the tank 12a is tilted for rising and loaded again with a predetermined quantity of raw feces by means of a raw feces supplying screw conveyor and then operation of the apparatus is resumed again in due course.

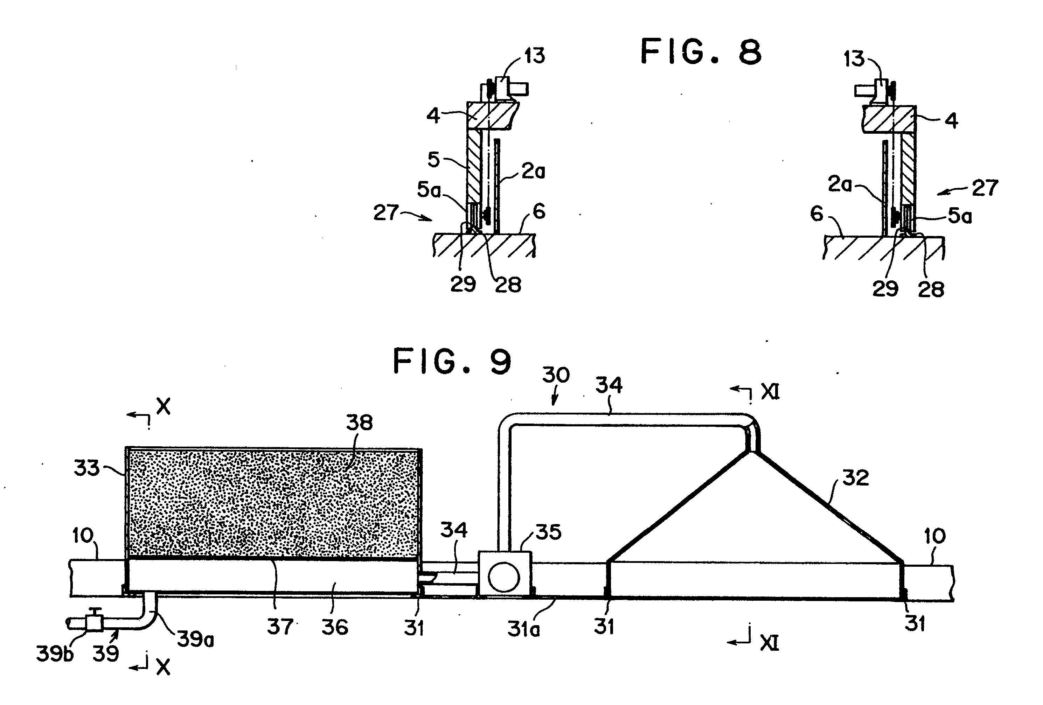

In the foregoing, there are provided the control devices to prevent a possible meandering movement of the carrier during its travelling. But the same end can also be achieved by arranging, in place of using the control devices, a pair of rail facilities 27 as shown in Fig. 8 and running the carrier on the rails.

More specifically, a pair of left and right thick steel-strip foundation plates 28, 28 are fixedly laid on the surface of the floor 6 respectively outside of, and in parallel to, the pit walls 2a, 2a, and rails 29, 29 are securely attached to the middle portions of the top-side surfaces of the respective foundation plates by means of welding or the like to make up the rail facilities 27. The wheels 5a, 5a,... of the carrier 4 are mounted on the foregoing rails 29, 29 so that the carrier 4 may be guided thereby and forced to move therealong as it travels, thus providing the forward and rearward travel free of meandering.

As stated in the foregoing, the fermentative excrements treatment apparatus 1 according to the preferred embodiment of the present invention is such that the carrier 4 thereof comprises the frame base 4a broad enough to extend crosswise and beyond the pit walls 2a, 2a located along both sides of the elongated fermentative treatment pen 2 and the pairs of left and right supporting legs 5, 5, ... attached to the frame base 2a, one pair thereof attached to the front portion of the frame base 2a and the other pair attached to the rear portion, and each wheel 5a attached to one or another supporting leg 5 is placed on the surface of the floor 6 outside of one or the other of the pit walls 2a, 2a in the pen 2 so as to have the whole weight of the carrier 4 with the foregoing various equipment borne by the surface of the floor 6. In other words, the weight of the whole of the apparatus 1 is thus borne by the floor so that it is now possible to use lightweight and thin wooden or synthetic resin boarding materials to construct the pit walls 2a, 2a in stead of conventional thick and heavy concrete pit walls. This results in easier and more economical construction of the fermentative treatment pen 2 and eases the weight limitation of the apparatus 1 to allow more freedom in designing the same.

In the foregoing treatment apparatus 1 according to the first aspect of the present invention, it is not possible to prevent the indoor environment of the building 7 from becoming polluted with the offensive-odor gas mist rising therefrom during the agitation operation. According to the second aspect of the present invention, there is proposed a new fermentative treatment apparatus which is an improvement to the foregoing fermentative treatment apparatus comprising the agitation device 11 and the spreader device 12 which are disposed in the widthwise direction of the pen 2 according to the first aspect of the present invention. This newly proposed treatment apparatus permits to perform the agitation and raw feces spreading operations without an indoor environmental pollution with the above mentioned gas mist generated during such operations while, at the same time, avoiding electric and other equipment installed indoors from corrosion with such gas mist. More specifically, in a fermentative excrements treatment apparatus which comprises an agitation device provided on one-side portion of carrier and a spreader device on the other side portion of the carrier so as to be located side by side and turnable for reversal of their directions as arranged according to the first aspect of the present invention, there is additionally provided a deodorization device placed before or after where the agitation device and the spreader device are provided side by side, according to the second aspect of the present invention.

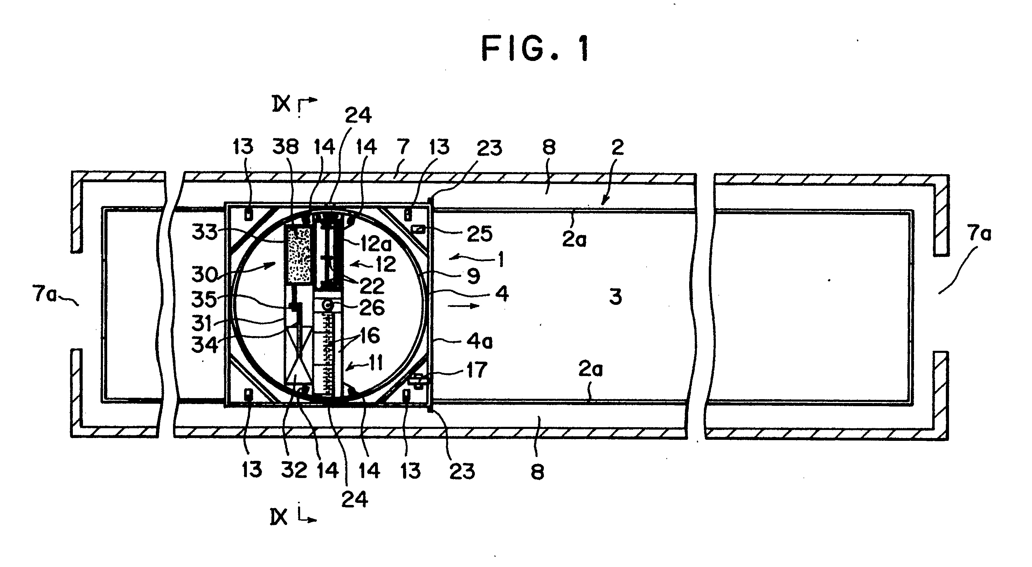

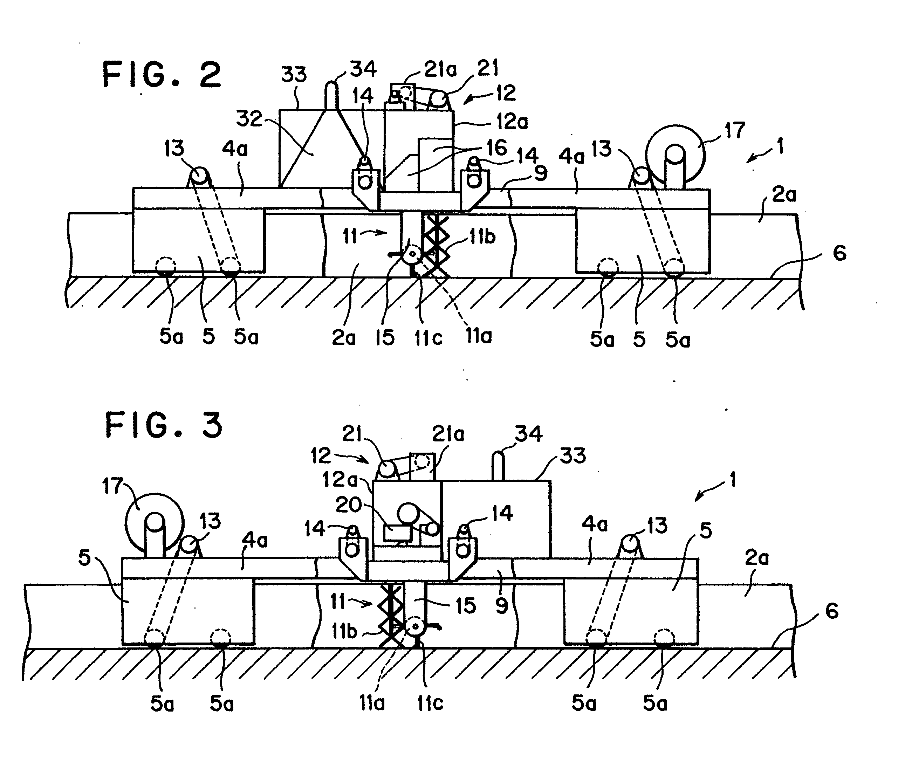

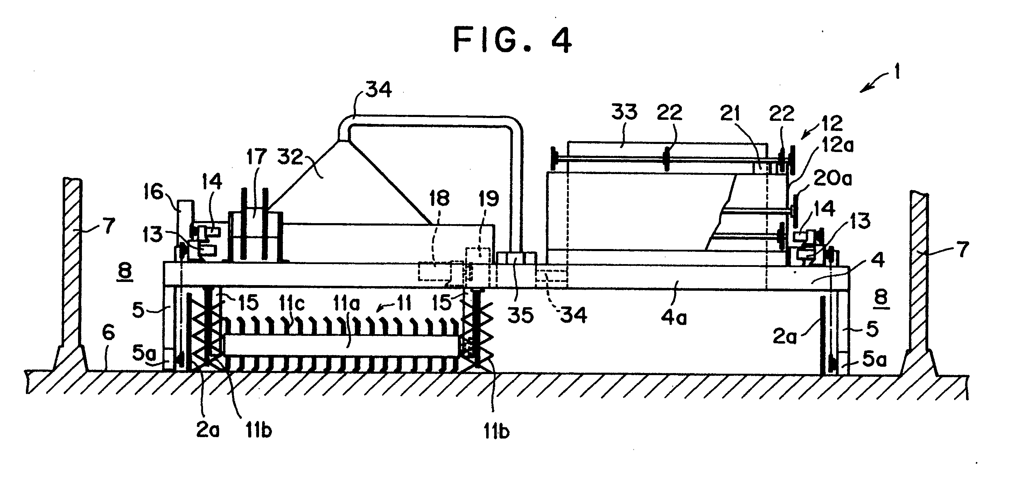

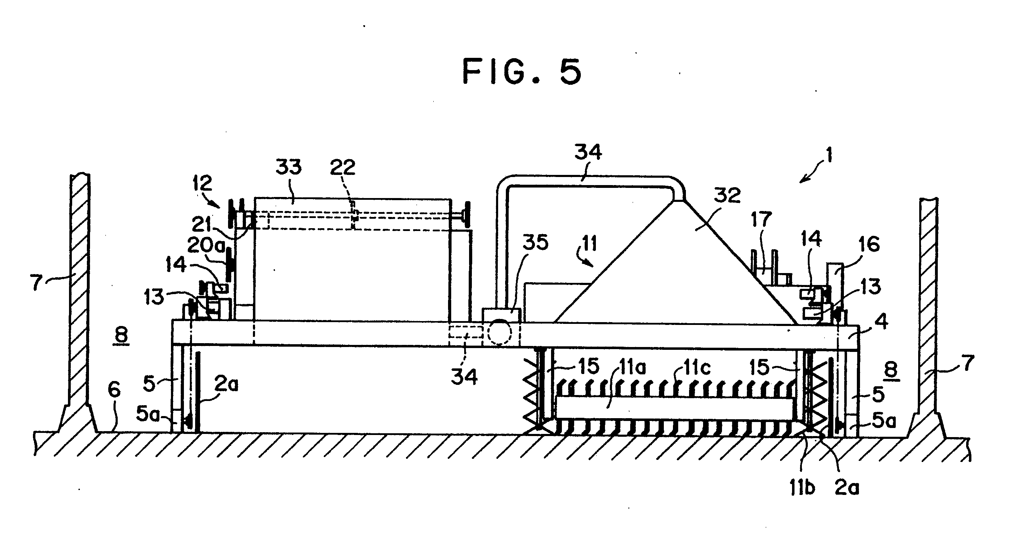

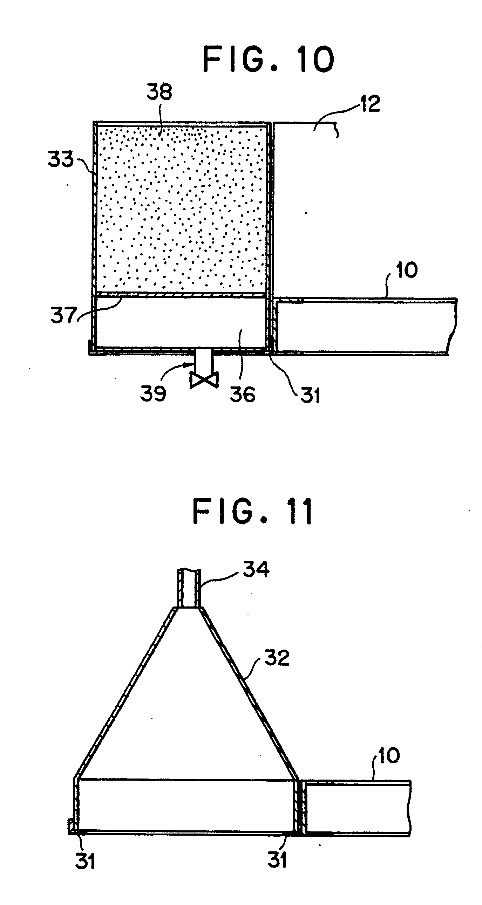

In the following, an embodiment example of the second aspect of the present invention will be explained with reference to Figs. 1 through 7 referred to in the foregoing and, in addition, to Figs. 9 through 11.

In these drawings, 30 denotes a deodorization device. The deodorization device 30 shown in this embodiment example represents one provided to be located behind where the agitation device 11 and the raw feces spreader device 12 are attached side by side to the rotatable frame 10 of the carrier 4. More specifically, the deodorization device 30 is mounted on a mounting base frame 31 which is integrally annexed to the rear of the rotatable frame 10 so as to extend and project in the direction opposite to the carrier's advance direction.

To describe it more in detail, the deodorization device comprises a hood 32 disposed to be adjacent to the rear of the agitation device 11 and open downward, a deodorization box 33 disposed to be adjacent to the rear of the spreader device 12, a conduit 34 connecting the top of the hood 32 and the lower portion of the deodorization box to each other, and a suction device 35 comprising a motor and and a fan (a blower) and interposed in the conduit 34. The suction device 35 is located at the middle between the hood 32 on one side and the deodorization box 33 on the other and mounted on an intermediate supporting plate 31a. Comprised in the interior of the deodorization box 33 are a lower space 36 communicating with the foregoing conduit 34, a permeable rack 37 which can be made of a drain board, a corrosion-proof wire netting, a grating or the like and which is provided with numerous small pores and laid horizontally along the top side of the space 36, and a deodorant packed layer 38 formed thereabove by packing activated carbon or any other suitable deodorant there from the top-side surface of the permeable rack up to near the ceiling of the box. Preferably, there can be additionally provided a drain device 39 in the bottom wall of the deodorization box 33. The drain device 39 comprises a drain pipe 39a communicating with the lower space 36 and a switch valve 39b.

As described above, the carrier 4 is further provided with the deodorization device 30 in addition to the agitation device 11 and the raw feces spreader device 12 attached thereto side by side. Thus, when the suction device 35 of the deodorization device 30 is actuated and kept in operation during the forward and rearward travel of the carrier 4, the gas mist rising with the agitation of the accumulated layer of excrements and the simultaneous spreading of the raw feces being carried out by simultaneous and parallel operations of the agitation device 11 and the spreader device 12 going on while the carrier 4 is traveling back and forth is sucked right away into the deodorization device 30 through the hood 32 adjacent to the agitation device 11, so that diffusion of the gas mist into the outside environment can be avoided. The gas mist sucked through the hood 32 goes through the conduit 34 and enters the lower space 36 of the deodorization box 33 to immediately pass through the numerous permeable holes of the permeable rack 37 provided thereabove. The gas mist then permeates into the deodorant packed layer 39 formed on the rack and such harmful gases as an offensive-odor gas, a corrosive gas or the like contained therein are adsorbed by the layer. After that, the gas mist so cleaned is taken away through the upper surface of the layer as an odorless air while vapor content in the gas mist is condensed to water during this process and said water is then stored in the lower space 39 and drained out through the drain device 38 whenever appropriate.

Thus, with the foregoing fermentative treatment apparatus according to the second aspect of the present invention, the above mentioned ill effects of the gas mist observed previously as noted in the foregoing as caused by the agitation and the raw feces spreading operations performed while the apparatus is travelling back and forth are removed, thereby enabling the operations to be performed in a good working environment at all times for improvement of both the work efficiency and the environmental hygiene.

Furthermore, as described in the foregoing, before or after where the agitation device 11 and the raw feces spreader device 12 are attached to the carrier 4 side by side in the widthwise direction of the pit 3, the hood 32 is provided by the side of the agitation device and the deodorization box 33 provided by the side of the raw feces spreader device 12. This arrangement provides an well balanced disposition as a whole and enables the back-and-forth travel and the 180° turn at each of both ends of the pit to be carried out smoothly and satisfactorily.

In the case of the carrier devices employed with the conventional fermentation treatment apparatus and the one according to the present invention described in the foregoing, water drops condensed on the ceiling of a building housing the treatment facilities fall onto the surface of the circular track 9 and said surface of the track 9 becomes wetted and contaminated with a slippery mud-like material formed of the water drops and dust, so that when the rotary mount or the rotatable frame 10 is operated to rotate on and along the circular track 9 in subsequent operations of the carrier device the wheels 10a of the rotary mount or the rotatable frame should slip and fail to make the required 180° turn smoothly, this being a significant inconvenience.

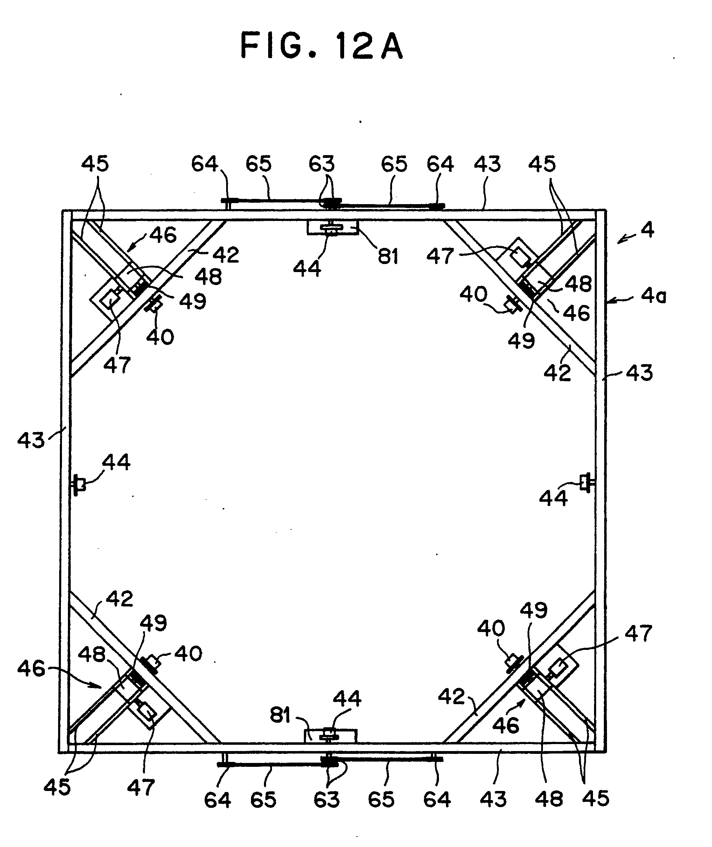

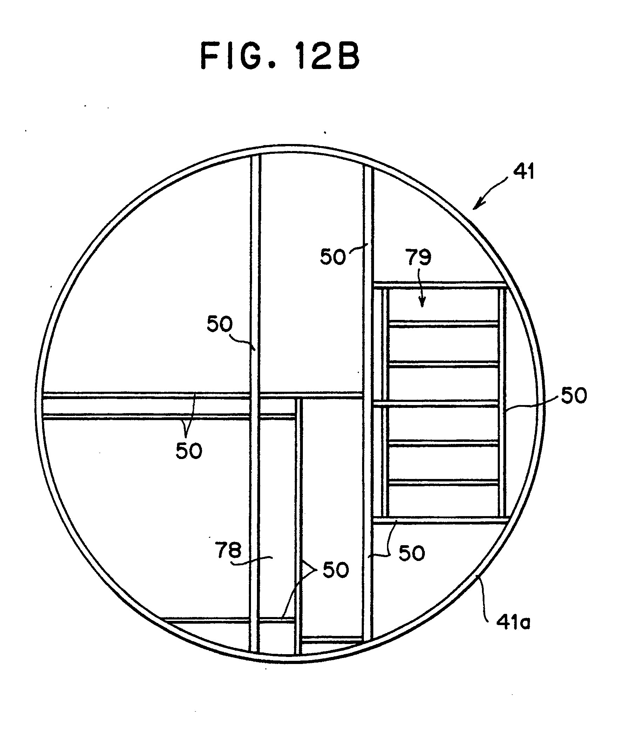

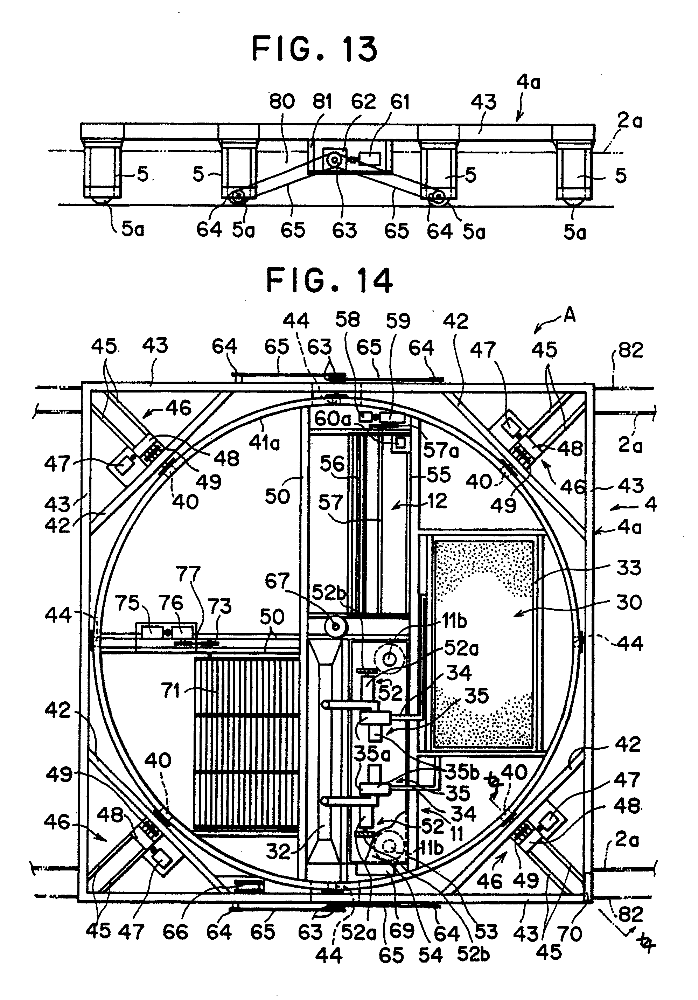

Another aspect of the present invention is, therefore, to provide for a fermentative treatment apparatus a carrier device which does away with said inconvenience and enables the required 180° turn to be carried out completely without failure. There will now be described below with reference to the accompanying drawings an embodiment example thereof in which the carrier device is characterized in that it comprises a carrier 4 comprising an enclosing frame base 4a provided with travel wheels 5a disposed on both sides thereof and further provided with a plurality of driving wheels 40 disposed circumferentially on the inner thereof, and a circular supporting base 41 having at least the agitation device 11 attached thereto and positioned in such a manner that only the circumferential portion (41a) thereof may be mounted on the circumferentially disposed driving wheels 40. Referring to Fig. 12A, the carrier 4 comprises the enclosing frame base 4a and a plurality of the travel wheels 5a, 5a disposed on the frame base 4a. The enclosing frame base 4a is generally square or rectangular in shape and constructed of any suitable shape steel selected from H steel, L steel, channel steel, hollowed square steel, etc. coming in different sectional shapes and sizes. For example, the enclosing frame base 4a has been made square-shaped in the embodiment example shown. According to the present invention, the enclosing frame base 4a of the carrier 4 is provided with a plurality of driving wheels 40 attached thereto in such a way that the wheels 40 may be projecting from the inner peripheral surface of the enclosing frame thereof into the inner space within its frame members and disposed circumferentially so as to have the circular supporting base 41 as shown as an embodiment example thereof in Fig. 12B mounted on and borne by these wheels 40 at its circumferential portion 41a. Thus, the circular supporting base 41 is rotated by the driving wheels 40 when these wheels disposed to engage with the underside surface of the circumferential portion 41a thereof are dirven for rotation. The circular supporting base 41 is, as shown in Fig. 14, provided with at least the agitation device 11 which will be turned together with the circular supporting base 41 when the circular supporting base rotates. The carrier device just described in the foregoing is an embodiment example of the carrier device A according to the present invention.

It is preferable and general that these driving wheels 40 are disposed at equal spaces in the circumferential direction for each wheel to share equally the burden of bearing the weight of the circular supporting base 41 and at the same time drive the circular supporting base 41 for balanced rotation. Therefore, a comparatively small-sized motor will suffice as a driving motor 42 for each driving wheel, which will be discussed later. In the example shown, there are provided at the four corners of the square shaped enclosing frame base four driving-wheel mounting steel frames 42, 42, 42, 42, each of which is laid across between each two frame members 43, 43 of the enclsing frame base crossing each other at right angles at each of the four corners. Each one of the shafts for these driving wheels 40, 40, 40, 40, is rotatably attached to the center portion of one or another of the steel frames 42, 42, 42, 42 so that the four driving wheels attached thereto may be disposed circumferentially at equal spaces. More preferably, in order to alleviate the burden per driving wheel 40 of bearing the circular supporting base 41, there may be provided bearing wheels 44, 44, 44, 44, each of which is disposed at the midpoint of one or another of the frame members 43, 43, 43, 43 forming the four sides of the enclosing frame base 4a, that is, at the halfway point between each two of the driving wheels 40, 40, 40, 40, so that the circumferential portion 41a of the circular supporting base 41 may be supported by eight wheels in all disposed at equal spaces, as shown in Fig. 14. Furthermore, these driving wheels 40, 40, 40, 40 are arranged to be driven by driving gears 46, each of which is mounted on one or another of driving-gear mounting frames 45, 45 positioned perpendicular to the foregoing steel frames 42, 42, 42, 42 Each of said mounting frames 45 is made of a pair of steel frame member extending up to the angular portion another of the four corners of the enclosing frame base 4a. The driving gear 46 comprises a driving motor 47, a decelerator 48 and a chain-sprocket transmission gear 49.

The circular supporting base 41 may be constructed of a disc-like plate made of steel or similar metal material, but it is more preferrable that, as in the case of the example shown, the circumferential frame 41a is formed of a channel steel-like circumferential frame 41a whose section is practically U-shaped and the inner space encircled by the circumferential frame 41a contains a plurality of supporting frame members 50 formed of shaped steel of suitable sizes and sectional shapes welded integrally to the inner circumferential surface of the circumferential frame 41a and intersecting said inner space longitudinally and latitudinally, said supporting frame members intended to have the agitation device 11 and other various devices attached thereto. Thus, the circular supporting base 41 as a whole is made comparatively lightweight while the space between these supporting frame members 50 can be effectively utilized as will be discussed later.

It is thus preferrable that the circular supporting base 41 carries the foregoing agitation device 11 so attached to these supporting frame members 50, 50 located within the circumferential frame 41a thereof as to take up one diametrically divided half portion thereof and the spreader device 12 for spreading such organic wastes as domestic animal excrements or sludges so attached to them as to take up the other diametrically divided half portion thereof.

The agitation device 11 comprises a horizontal rotary type agitator 11a rotatably supported by these supporting frame members 50 at the lower ends of a pair of downward-suspending left and right driving chain cases 15, 15 for the rotary type agitator 11a and the pair of left and right vertical screw type agitators 11b located somewhat forward of the rotary agitator 11a. 52 denotes a driving gear for driving the agitator 11a. The driving gear 52 comprising a driving motor 52a and a sprocket 52b is housed in an encasement box 53 mounted on the top sides of the supporting frame members 50. The top side of the box is covered with an openable cover 54. Another driving gear which is for the vertical agitators 11b, 11b is also housed in this encasement box 53.

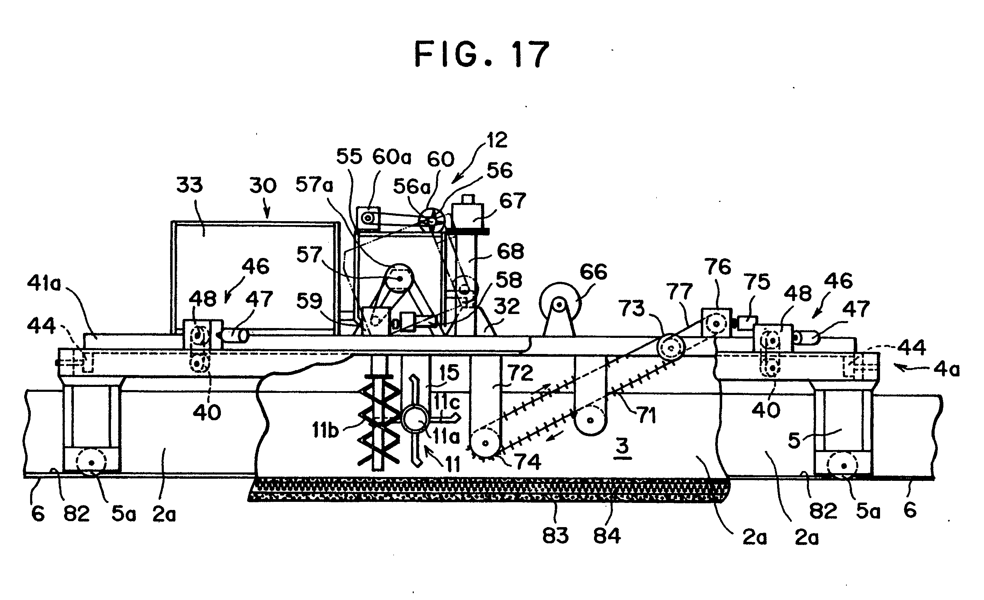

The spreader device 12 comprises a receiving tank 55 which is tiltable and receives those materials to be treated and an impeller 56 for spreading laid near the rear edge of the opening side of the tank so as to be extending therealong in the widthwise direction. The tank 55 has a rotary shaft 57 at the center thereof and, as a sprocket 57a provided at the outer end of the rotary shaft 59 is driven by a driving motor 58 via the chain sprocket of a decelerator 59, the tank 55 is gradually turned rearwards as indicated by the arrow and tilted as indicated by the imaginary diagram shown in Fig. 17. The impeller 56 for spreading has a plurality of vanes disposed radially on the circumferential surface of its rotary shaft 56a. A sprocket 60 provided at the outer end of the rotary shaft 56a is chain-connected to a driving motor 60a provided forward of the opening end of the tank 55. Thus, as the motor 60a is operated, the impeller 56 is driven thereby for rotation and the waste materials to be treated flowing out of the tank 55 are thrown and scattered by the vanes 56 and thus become spread.

As for the travel wheels 5a attached to the underside surfaces of the frame members 43 on both sides of the enclosing frame base 4a of the carrier 4, they are provided four on each side and aligned in the longitudinal direction in the example shown and the two intermediate ones thereof on each side are driven by a driving motor 61 through a chain-connected sprocket. In the drawing, 62 denotes a decelerator, 63 denotes a double sprocket provided on the rotary shaft of the decelerator 62, 64 refers to a sprocket provided at the outer end of each of the rotary shafts for the intermediate travel wheels 5a, 5a, and 65 represents a chain connecting the sprockets 63 and 64 to each other.

Furthermore, these driving motor 61 and decelerator 62 may be provided on the top side of the enclosing frame base 4a whenever so desired although not so illustrated in the drawings. In the drawings, 66 denotes a cord reel which is provided on the enclosing frame base 4a and on which is wound around an external power source connection cord while 67 represents a slip ring fitted on the top portion of a supporting column 68 made of shape steel and located at about the center of the circular supporting base 41. 69 denotes an operation control board for various controllers controlling the driving motors 47 for the foregoing driving wheels 40, the motors for the horizontal type and the vertical type agitators and also the motors for the spreader and other devices while 70 refers to an operation control board for control of the driving motor 61 to drive the travel wheels 5a. Moreover, the power supply cord from the cord steel 66 is branched off into two, one of which is used to connect to the operation control board 69 for various controllers via the foregoing slip ring 67 and the other one of which is used to connect directly to the operation control board 70. In addition, preferably the operation control board 70 for control of the travel wheel-driving motor is connected via the slip ring 67 to the operation control board 69 by means of a control signal transmission cable or cord through which control signals are transmitted from the operation control board 69 to the operation control board 70. In the drawings, these connection cords are omitted.

The foregoing carrier device A of the present invention which can be empolyed to make up a fermentative treatment apparatus according to the present invention is, for example, so positioned as to have the travel wheels 5a, 5a on both sides of its carrier placed on rails laid on the top-side surfaces of both the longitudinally extending side walls of a conventional, elongated rectangular concrete fermentation treatment pen, and operated as follows. Namely, an on-off switch of the operation control board 70 for control of the travel-wheel driving motor is turned on to run the carrier device and, through an automatic control performed by known limit switch systems disposed by the side of the carrier device and by the side of the fermentative treatment pen, the carrier device is operated such that it travels back and forth within a predetermined length or distance along the fermentative treatment pen and, at the end of each of the forward and rearward travels, the carrier thereof is halted temporarily and in this condition the circular supporting base 41 incorporated therein is turned round to reverse the direction of the agitation device 11 and that of the spreader device 12 which are both attached thereto, and then the carrier 4 resumes its travel. On the other hand, the operation control board 69 for the various devices is switched on to get both the agitation device 11 supported on one side of the circular supporting base and the spreader device 12 supported on the other side of the circular supporting base to operate while the carrier 4 is travelling back and forth, so that, in the inside of the elongated rectangular pit surrounded by the fermentative treatment pen, the waste materials to be treated are spread and accumulated by the spreader device 12 for one widthwise half portion of the pit and the waste materials so spread and accumulated are agitated by the agitation device 11 for the other widthwise half portion thereof, these spread-accumulation and agitation operations thus being performed simultaneously and alternately over the entire length of the pit as the carrier 4 travels back and forth therealong. Thus, there can be brought about a favorable aerobic fermentation condition for the waste materials heaped or accumulated to a desired height therein and in this condition decomposition thereof and dehydration/drying thereof through evaporation of the water content can be carried on for any desired length of time to eventually produce an well-ripened compost or manure dehydrated so much as to contain, for instance, just about 35% water content.

Meanwhile, in the carrier device according to the present invention, it is so arranged that, as described in the foregoing, the enclosing frame base 4a of the carrier 4 has a plurality of the driving wheels 40 disposed circumferentially within its enclosing frame and the circular supporting base 41 is mounted on the driving wheels 40 so as to be supported thereby at the circumferential portion 41a thereof. Therefore, the underside of the circumferential portion 41a of the circular supporting base 41 and these driving wheels 40 are protected from dust that could deposit thereon and water drops falling down from the ceiling of a building erected to house the fermentative treatment pen. Thus, the frictional engagement or contact with each other of the underside of the circumferential portion which is the uderside of the circumferential frame 41a in this embodiment example and those driving wheels 40 is always kept good to assure that the circumferential portion 41a is turned by the driving wheels 40 without slipping, at all times. As a result, the required 180° turn of the circular supporting base 41 can be obtained without failure when necessary. This not only has solved the problem of slipping which is inevitable with the afore-mentioned conventional carrier device in which the carrier is provided with a circular rail track fixedly attached thereto and the wheels of the rotary mount are mounted on the rail track,but also makes construction cost thereof comparatively lower because of its simpler structure, all these being the advantageous effects of the present invention.

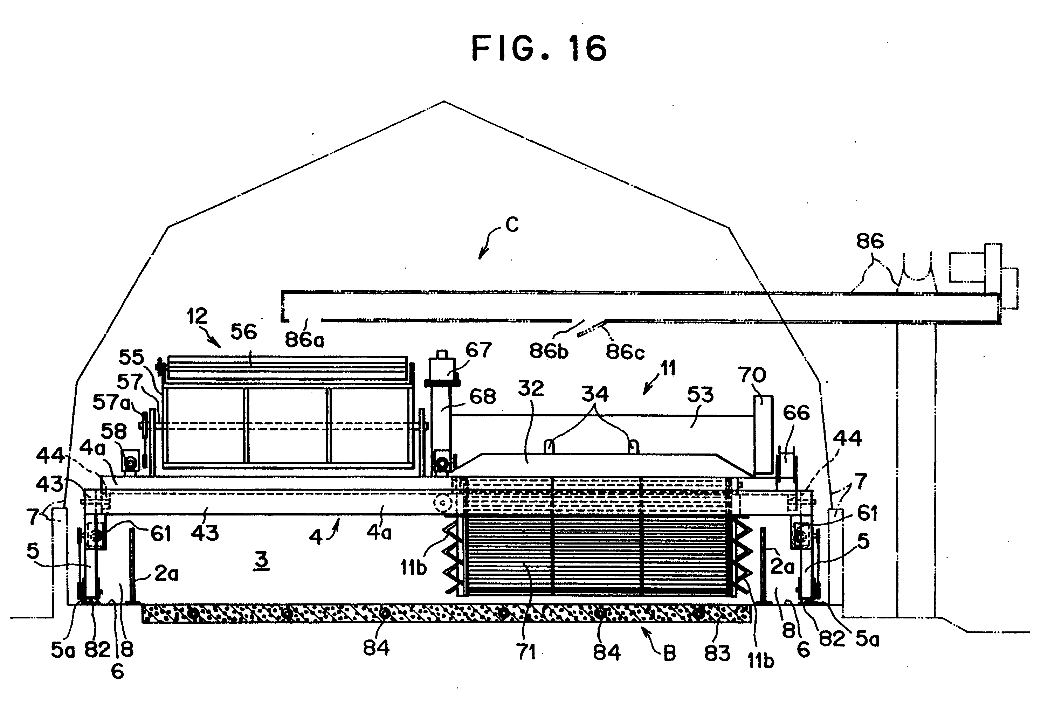

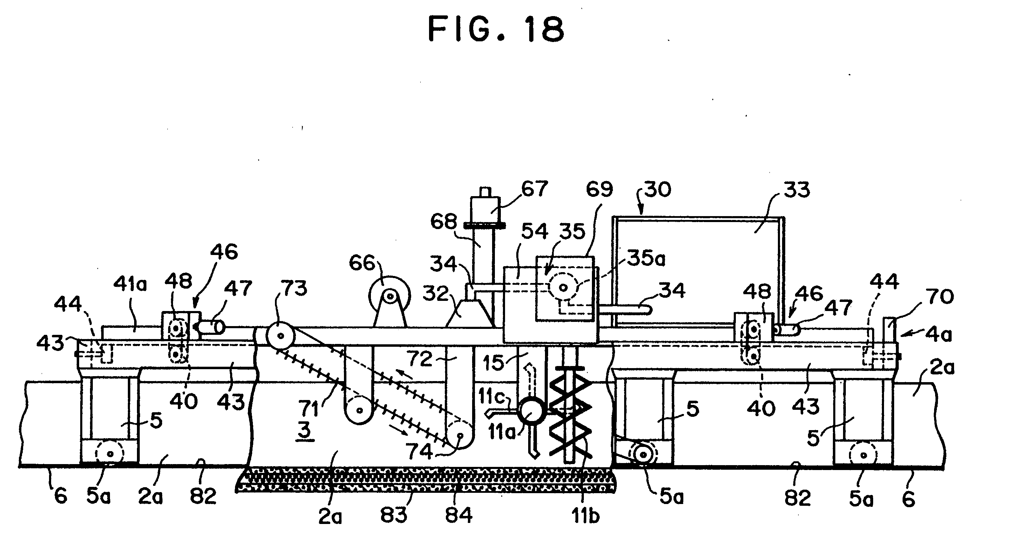

Furthermore, in the carrier device A of the present invention, as shown clearly in Figs. 14 through 18, there is provided behind the horizontal rotary type agitator thereof a chain conveyor 71 for conveying waste materials to be treated, said conveyor being installed there in such a way that it may be slanted upward from the front end thereof to the rear end thereof and supported in place via a pair of left and right supporting arms 72, 72 suspended downwards from the pair of left and right supporting frame members 50, 50. The chain conveyor 71 is rotatably supported by its upper-end sprocket 73 and lower-end sprocket 74 so as to be able to rotate in the arrow-indicated direction. More specifically, the upper-end sprocket 73 is driven via a decelerator 76 and a chain sprocket 77 by a driving motor 75 mounted on the supporting frame member 50 of the circular supporting base 41.

The chain conveyor 71 functions to receive the waste materials agitated by the horizontal rotary type agitator 11a located in the front thereof and convey the waster materials rearwards for accumulation. In this way, a layer of the waste materials being treated and accumulated behind the agitator 11a is removed therefrom to alleviate the load applying to the agitator 11a during its agitation operation and enables the agitation operation to be performed smoothly as the waste materials are conveyed rearwards and then accumulated or heaped to the height equivalent to that of the rear-end height of the conveyor 71. Accordingly, the inside of said accumulated layer for fermentation is prevented so much from being exposed to and cooled by the outside air and thus can undergo a high-temperature fermentation more effectively.

Preferably the circular supporting frame 41 of the carrier device A of the present invention is further provided thereon with the deodorization device 30 complete with the hood 32 opening in the close vicinity of the agitator 11a, as shown in Fig. 14. The hood 32 is mounted on a square enclosing frame formed of the supporting frame members 50 so as to be positioned close to the agitation device 11, cover a space 78 formed within the square enclosing frame (see Fig. 12B) and open downwards. Further, the deodorization box 33 of the deodorization device 30 connected to the conduit 34 coming from the pinnacle portion of the hood 32 is positioned so as to be on the front half of the space area within the circular supporting base 41. In other words, the deodorization device 30 is mounted on a rack 79 (see Fig. 12B) formed of the supporting frame members 50 intersecting longitudinally and latitudinally in the space formed between the circumferential frame 41a and one of the supporting frame members 50 extending widthwise. The suction device 35 comprises a blower 35a and a driving motor 35b to drive the same, and the blower 35b is interposed in the foregoing conduit 34. In the example shown, there are provided two units of the suction device 35, one on the left side and the other on the right side, which are housed in the above-mentioned encasement box 54 and operated through the foregoing operation control board 69. The deodorization device is of the same construction as given in the embodiment example described earlier, wherein it comprises a deodorization box 33 having therein a permeable rack 37 consisting of wire net or a grid laid horizontally so as to have a lower space 36 therebelow, a deodorant packed layer 38 formed of activated carbon or the like and provided on the rack, 37 and a drain device 39 provided in the bottom wall of the box. The lower space 36 is communicated with the foregoing conduit 34 while the drain device 39 comprises a drain pipe 39a and a switching valve 39b.

Operations of the suction device 35 and the deodorization device 30 are as follows:

When both the horizontal rotary agitator 11a and the vertical agitators 11b of the carrier device A are operated to agitate the accumulated layer of the waste materials while the carrier device A is travelling, there rise, like a mist, from the accumulated layer of the waste materials various pollution gases comprising ammonia and other gases formed and/or decomposed through fermentation of the waste materials as well as vapors of the water content contained in the waste materials. With the suction device operated, the blower 35a operates to suck these pollution gases into the deodorization hood 32 opening near and above the agitator 11a and the gases so sucked thereinto go through the conduit 34 to enter the lower space 36 of the deodorization device 30 and then go into the deodorant packed layer 38 through the permeable rack 37 and adsorbed thereby. On the other hand, condensed water produced by cooling is discharged through the drain device 39. As described above, the suction device 35 and the deodorization device 30 combine to prevent pollution of the air and contamination of the machine and equipment with the pollution gases emitted with the agitation operation performed as the carrier device A moves to travel back and forth, thereby bringing about an improvement effect with respect to the working environment.

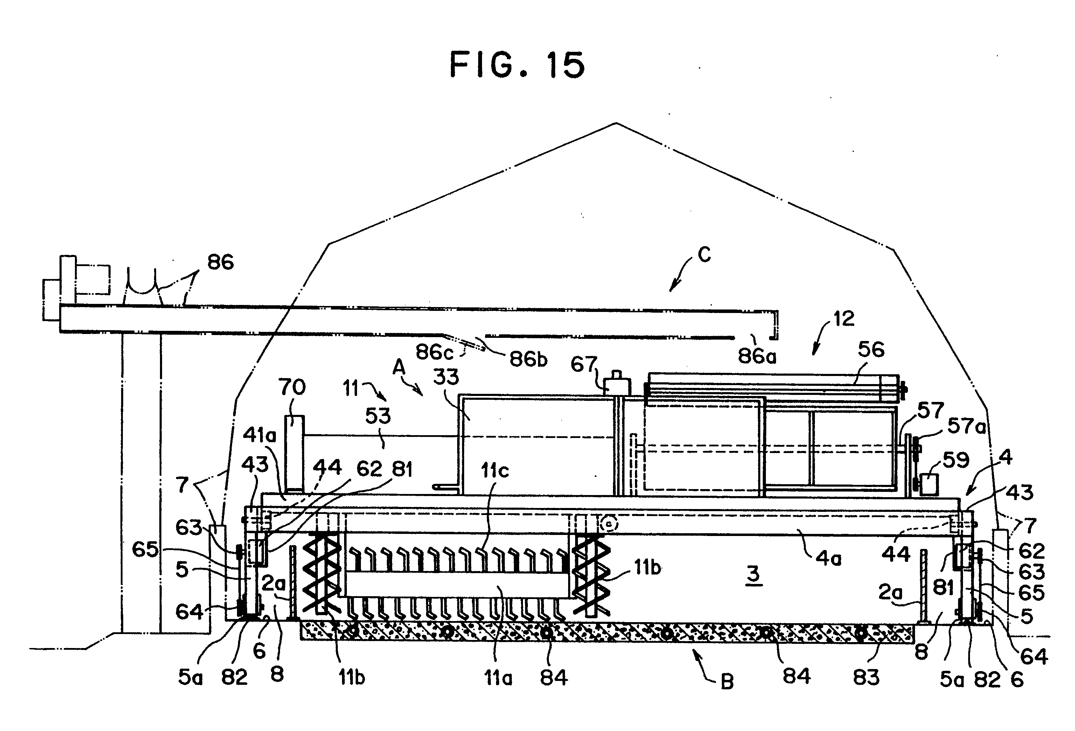

Now, if the carrier device A of the present invention is mounted on both the side walls of a fermentative treatment pen and operated to travel therealong as done conventionally, the entire weight of the carrier device A has to be borne by the pit walls on both sides of the fermentative treatment pen. Especially when the carrier device is complete with the foregoing various devices and equipment, it weighs considerably heavy as a whole. Therefore, it is desirable to make available a fermentative treatment apparatus in which the carrier device A of the present invention is employed in such a way that the weight thereof may not be applied to the pit walls on both sides of the fermentative treatment pen. An embodiment example thereof will be explained in the following. As shown in Figs. 12A, 13 and 14, the enclosing frame base 4a is designed to have a width broader than the predetermined one between the outer surfaces of the pit walls 2a, 2a on both sides of the fermentative treatment pen while both the side frame members 43, 43 thereof are made to have a height greater than that of either of the pit walls 2a, 2a. In addition, the enclosing frame base 4a is provided with the supporting legs 5, 5 which have the travel wheels 5a, 5a attached to the lower ends thereof, so that the enclosing frame base 4a is made rather tall. In the embodiment example, it has 4 supporting legs 5 disposed on each side thereof. Then, as mentioned in the foregoing, the circular supporting base 41 is mounted on the enclosing frame base 4a in such a way that it may be placed rotatably on the driving wheels 40 disposed circumferentially on the enclosing frame base 4a and be able to carry at least the agitation device 11, thus making up the carrier device A of the present invention. As described also in the foregoing, the most preferrable of the tall type carrier device A of the present invention may be obtained if it is further provided with the spreader device 12, the chain conveyor 71 for conveying the waste materials to be treated, the suction device 35 provided with the deodorization hood 32, and the deodorization device 30, as shown in Fig. 14. Then, the carrier device A can be made to extend widthwise over and beyond both the pit walls 2a, 2a erected on both sides of the prescribed fermentative treatment pen B as illustrated in Figs. 15 through 18 and have the supporting legs on both sides thereof placed rotatably with their travel wheels 5a, 5a on the concrete paved floor surfaces 6, 6 provided on the sites outside of the pit walls, whereby the fermentative treatment apparatus C of the present invention whose weight is not borne at all by the pit walls 2a, 2a provided on both sides of the fermentative treatment pen but entirely supported or borne by the floor surfaces 6, 6 can be materialized. In the carrier device A provided with the supporting legs, there is formed below the frame member 43 a space 80 between the two neighboring intermediate supporting legs 5, 5 and preferrably said space 80 is utilized effectively by providing therein a hanging shelf 81 suspended downward from the frame member 43 and mounting on the shelf the afore-mentioned driving motor 61 and decelerator 62.

In the above case, preferrably rails 82, 82 are laid on the floor surfaces 6, 6 in such a way that they may run in parallel to each other and along the pit walls 2a,2a on both sides, and the wheels 5a, 5a attached to the supporting legs 5, 5 provided on both sides of the carrier are mounted on the rails 2a,2a for the carrier to travel back and forth therealong.

As described in the foregoing, the burden of bearing the weight of the carrier device A does not fall on the pit walls 2a,2a on both sides, so that the pit walls 2a,2a do not necessarily have to be constructed of a strong thick concrete structure as was required before but can be made thinner and easily constructed of formed wall boarding made of any suitable material such as commercially readily available inorganic formed blocks readily used to build a block wall or of formed synthetic resin panels, formed reinforcement panels of any suitable material, heat-insulating panels or the like.

Thus, the fermentative treatment pen B can be constructed comparatively easily and speedily with less cost.

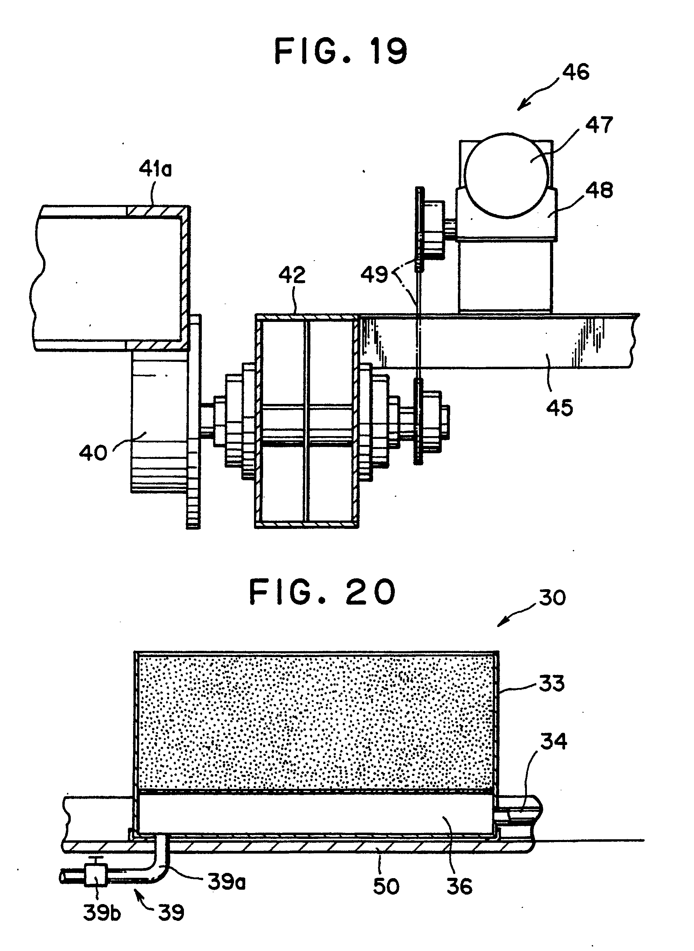

As shown in Figs. 15 through 21, the fermentative treatment pen B can be formed of only the pit walls 2a, 2a erected on both sides so that the pit 3 formed between the two side walls 2a, 2a may have open-end sides 3a, 3a at both ends thereof, in which case said fermentative treatment pen B can be constructed more easily with less cost as compared with an elongated rectangular enclosure type fermentative treatment pen and permits to take out the fermentatively treated manure with higher efficiency. In addition, for such maintenance works as cleaning, inspectons, repairs and so on of the carrier device A, the carrier device A can be moved forward or rearward, removed off the fermentative treatment pen B and serviced there for any necessary maintenance work, thus permitting the maintenance work to be carried out easily without being bothered with the fermentative treatment pen and offensive odors arising from the accumulated layer of excrements in the pen B.

If desired, both the open-end sides 3a, 3a can be kept closed when the carrier device is operating.

However, it is not always necessary to have open-end sides 3a, 3a at both ends of the pit 3 for permitting the maintenance work to be carried out easily as above, and it is sufficient to have a single open-end side 3a at either one end of the front and rear ends of the pit 3, and thereby the same purpose and advantage as above can be achieved.

Lengths and heights of the pit walls 2a, 2a of the fermentative treatment pen B may be determined as desired. In the case of the embodiment example shown in Figs. 15 through 21, the overall length of the pit wall 2a is 100 m, height thereof is 1 m, and width of the pit 3 formed between the pit walls 2a, 2a on both sides is 7.5 m while the carrier 4 mounted to span the pit 3 is 8.7 m in width and its supporting leg 5 measures 1.5 m in height. The pit wall 2a is made thin and measures, for instance 100 mm in thickness.

In the drawings, 83 denotes a graveled layer of broken stones covering the bottom surface of the pit 3, 84 refers to a plurality of diffsion pipes buried at regular intervals in the graveled layer of broken stones 83, 85 represents a supply tank to contain the waste materials to be treated, which is located outside of a vinyl sheet-roofed type hut housing the fermentative treatment pen B, and 86 denotes a screw conveyor for supplying the waste materials 86 to be treated, said conveyor so installed as to ascend from the supply tank 85, go through the side wall of the hut 7 and extend up to above the lengthwise halfway portion of the fermentative treatment pen B. The conveyor 86 is provided with two outlets 86a, 86b, one of which is located above one widthwise half portion of the pit 3 and the other of which is located above the other widthwise half portion. The outlet 86b closer to the supply tank is provided with a lid 86a that is automatically controlled to open and close.

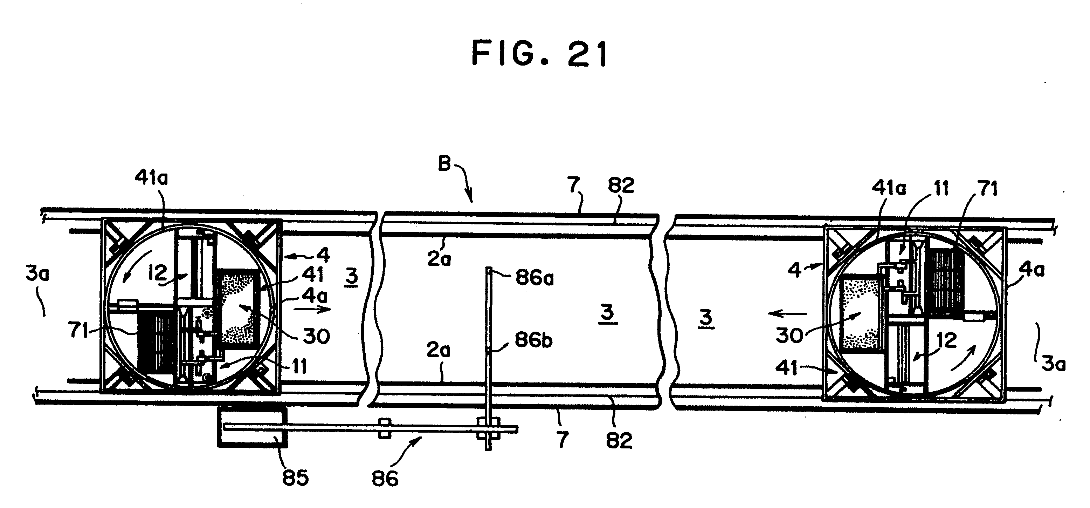

Next, operation of the fermentative treatment apparatus C will be explained with reference to Fig. 21.

The carrier device A receives, at the halfway point of the fermentative treatment pen B, into the tank 55 of the spreader device 12 provided on the carrier 4 a predetermined quantity of raw feces of domestic animals or, more strictly speaking, a mixture or excrements composed mainly of their feces and additionally their urine (hereinafter simply referred to as excrements) from the above-located screw conveyor 86 for waste materials to be treated, through the outlet 86a. Thereafter, the operation control boards 69 and 70 are switched on to actuate the carrier device A to travel and all the devices 11a, 11b, 34, 56, 57 and 71 on the circular supporting base 41 to operate, and then the carrier device starts moving along the fermentative treatment pen B. For instance, when the carrier device travels rightward in the drawing and has reached one end of the pen, the carrier 4 stops there and, in this position, the circular supporting base 41 makes a 180° turn in the arrow-indicated direction so that the various devices thereon may be turned by 180° together. Thereafter, the carrier device A is operated to start its leftward travel and when the carrier device A has come to the above mentioned halfway point of the pen B, the carrier 4 stops there together with the foregoing various devices which also stop operations at the same time at that point. In this condition, it receives into the tank 55 now empty of the excrements a predetermined quantity of the excrements from the screw conveyor through its outlet 86b. Then, the operation control boards 69, 70 are switched on again to resume the leftward travel of the carrier device A and when the carrier device A has reached the other end of the fermentative treatment pen B, the carrier stops there and then the circular supporting base 41 is turned by 180° in the arrow-indicated direction to turn the various devices thereon by 180°. Next, the carrier device A travels rightward and stops at the halfway point of the pen and the various devices also stop then. In this condition, through the outlet 86a, a predetermined quantity of the excrements is supplied again into the tank 55 from the screw conveyor 86. The foregoing cycle of operations including the back-and-forth travel of the carrier 4, the 180° turn of the circular supporting base 41 to turn the various devices thereon by 180°, etc. is repeated.

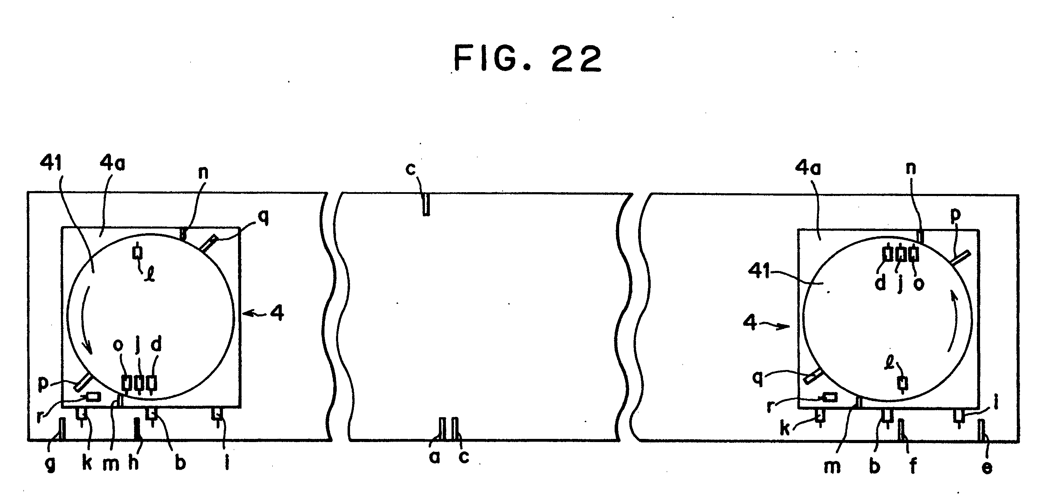

The 180° turn of the carrier device A at each of both ends of the fermentative treatment pen B and the stop thereof at the halfway point as described in the foregoing are carried out through operations of limit switch systems provided on both the carrier device A and the fermentative treatment pen B. Fig. 22 shows an example of how they can be disposed, wherein "a" denotes a travel-stopping bar provided at the halfway portion of one of the pit walls 2a, 2a on both sides, "b" denotes a travel-stopping limit switch which is attached to the enclosing frame base 4a of the carrier 4 and will be touched by the foregoing bar "a", "c" denotes an operation-stopping bar provided at the halfway point of each of both the pit walls 2a, 2a for all of the devices attached to the circular supporting base 41, "d" denotes an operation-stopping limit switch for said all of the devices which is provided on the circular supporting base 41 of the carrier 4 and will be touched by the foregoing operations-stopping bars "c", "c", "e" and "f" denote respectively a travel-stopping bar and a rotation bar provided on one end portion of said one of the pit walls 2a, 2a, "g" and "h" denote respectively a travel-stopping bar and a rotation bar provided on the other end portion of said one of the pit walls 2a, 2a, "i" denotes a travel-stopping limit switch which is attached to the enclosing frame base 4a of the carrier 4 and will be touched by the foregoing travel-stopping bar "e", "j" denotes a rotation limit switch which is provided on the circular supporting base 41 of the carrier 4 and will be touched by the foregoing rotation bar "f", "k" denotes a travel-stopping limit switch which is attached to the enclosing frame base 4a of the carrier 4 and will be touched by the foregoing travel-stopping bar "g", "l" denotes a rotation limit switch which is provided on the circular supporting base 41 and will be touched by the foregoing rotation bar "h", "m" and "n" denote respectively a rotation-stopping bar and another of the same which are so disposed on the enclosing frame base 4a as to be 180° apart from each other in terms of rotation angle, "o" denotes a rotation-stopping limit switch which is provided on the circular supporting base 41 and will be touched by the foregoing rotation-stopping bars "m" and "n", "p" and "q" denote travel- reversing bars so attached to the circular supporting base 41 as to be disposed 180° apart from each other in terms of rotation angle, and "r" denotes a travel-reversing limit switch which is provided on the enclosing frame base 4a and will be touched by the foregoing travel-reversing bars "p" and "q".

Thus, with the foregoing fermentative treatment apparatus C, there can be obtained a manure or compost dehydrated or dried to such an extent as to contain only about 35% water content when the fermentative treatment has been given therein for the predetermined peirod of time.

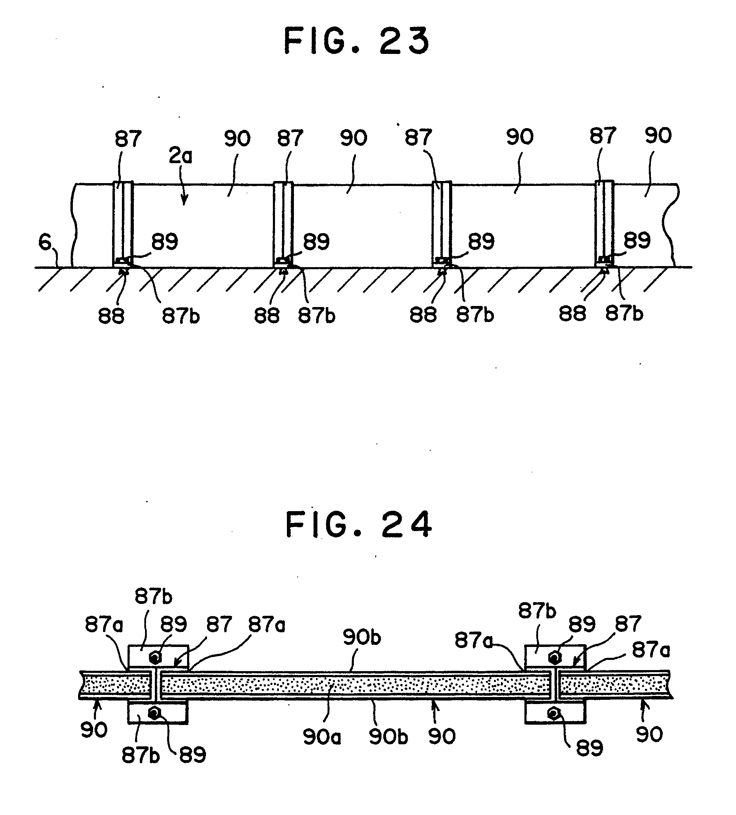

As mentioned above, a plurality of formed wall boards made of blocks or panels made from inorganic or organic materials can be used to construct both the pit walls 2a, 2a; for example, a plurality of them are put side by side in the lengthwise direction and each two neighboring ones of them are bonded to each other by means of a bonding agent such as cement to construct the pit walls. Preferably, they can be constructed without use of a bonding agent as shwon in Figs. 23 and 24, for example. Namely, two channels steels are welded back to back to each other to make a supporting column 87 provided with fitting channels 87a, 87a. A plurality of the supporting columns, each standing 1 m tall, for instance, are prepared and disposed at regular intervals in the longitudinal direction. In this case, the supporting column 87 has a horizontal foundation plate 87b projecting from each of both side surfaces of the lower end portion thereof and is securely fastened to the floor surface 6 when an anchor bolt 88 is driven into the floor through a hole bored through each foundation plate 87c and fastened in place with a nut 89 applied from above. Then, a formed wall board or panel 90 is fitted in the mutually facing fitting channels 87a, 87a of each two enighboring ones 87, 87 of the supporting columns 87, 87, ... built and disposed as described above. In this way, a pit wall 2a of any predetermined length can be constructed. In the case of the example shown, when insulating formed wall board such as a molded synthetic resin one, a foam plastic board, or the like, is used as the formed wall board 90, the heat generated by aerobic fermentation of the excrements being treated in the pit is effectively prevented from diffusing away into the outside of the pit through the pit walls 2a, 2a, so that a high-temperature fermentation can be maintained therein at all times.

The formed wall board 90 shown in the drawings is one example thereof in which it is a heat-insulating formed wall board comprising a formed heat-insulating layer 90a of inorganic or organic fibers and rigid plastic cover plates 90b, 90b attached to both sides of said layer 90a.

Dimensions of the formed wall board 90 and others can be determined optionally, and, needless to say, the pit wall 2a may be built to a desired height by putting one wall board upon another.

Further, as shown in Fig. 21, the fermentative treatment pen B can be formed of two pit walls 2a, 2a only which are so disposed on both sides thereof as to have a pit 3 therebetween and leave both ends of the pit 3 open as open-end sides 3a, 3a Thus, it facilitates operations to take out the accumulated excrements therefrom. In addition, since the carrier device A can be moved forward or rearward, removed out of the pen B through the front or rear open-end side and placed off the pen B for such maintenance works of the carrier device A as cleaning, inspections, repairs and so on, any of these maintenance works can be performed easily and sufficiently without being bothered with the side walls of the pen and the offensive odors arising from the accumulated layer of excrements. This is one of the advantages brought about by the present invention.

These open-end sides 3a, 3a may be kept closed by detachable wall panels while the carrier is moving to travel back and forth, if necessary.

In stead of the foregoing carrier device A, a varied carrier device A thereof as mentioned below may be used.

The varied carrier A according to another aspect of the present invention is characterized in that it has a sprocket provided outside of the circular supporting base 41 and driven by the driving gears 46 while the circular supporting base 41 is provided with a plurality of teeth disposed on the circumferential portion 41a thereof, and a chain is laid to stretch around the sprocket and the circumferential portion 41a of the circular supporting base 41 in such a manner that these teeth may be properly engaged with the chain and the circular supporting base 41 may be chain-driven through this arrangement.

In other words, whereas the driving wheels 40 are employed to turn the circular supporting base 41 in the embodiment example described earlier, a chain drive system is emplyoed instead to turn the same in the case of the above-mentioned arrangement.

Fig. 25 through 30 show one embodiment example of said varied carrier device A. In the drawings, the sprocket is denoted by 91, each toothe of the teeth is denoted by 92 and the chain is denoted by 93. Normally, any desired number of the teeth 92 may be disposed at regular intervals on and along the circumferential portion 41a of the circular supporting base 41. in order to make construction of the carrier device easier and less costing, a desired number of what may be called " a half sprocket" which is obtainable by halving a sprocket provided with a plurality of teeth, may be disposed at regular intervals on and along the circumferential surface of the circumferential portion 41a of the circular supporting base 41 and fixed thereto with a fixing means such as welding, bolts and nuts, etc.

In the case where a distance between the neighboring teeth 92 or half sprockets 94 is found to be relatively long over which the chain 93 has to extend for having the teeth or the half sprockets engaged therewith, it is preferrable and desirable that a continuous annular chain receiver 95 or a plurality of discontinuous arc-like chain receivers 95 is or are attached to the circumferential side surface of the circumferential portion 41a of the circular supporting base 41 so that the chain 93 may be received thereby when slackened.

Now, details of an embodiment example thereof will be described below with reference to the drawings.

Fig. 25 is a top view of an embodiment example of the carrier device A. The carrier device A is such that the enclosing frame base 4a of the carrier 4 thereof has only a plurality of the bearing wheels 44 or eight in all in the example shown disposed circumferentially on and along the inner peripheral surface thereof and the circular supporting base 41 positioned in the inside space of the enclosing frame base 4a is supported from under by the bearing wheels 44, 44, ...

In addition, the square enclosing frame base 4a is provided with a pair of mounting frames 45, 45 disposed diagonally for mounting thereon driving gears 46, and each of which driving gears 46 comprises a driving motor 47 and a decelerator 48. The sprocket 91 is attached to the rotary shaft of the decelerator 48 while a desired plurality of the half sprockets, each of which has a plurality of teeth 92, are disposed on and along the circumferential portion 41a of the circular supporting base 41. Further, the chain 93 is laid to stretch around the foregoing pair of sprockets 91, 91 and these half sprockets 94, 94, ... disposed on and along the circumferential portion 41a of the circular supporting base 41 so as to have them engaged therewith for chain-driving the circular supporting base by means of the chain 93. In the drawing, the previously mentioned devices and equipment attached to the enclosing frame base 4a and the circular supporting base 41 are omitted.

The embodiment example shown in the drawings will be described below in more details. The circumferential portion 41a of the circular supporting base 41 is formed of a circular channel steel whose section is practically U-shaped and there are disposed at regular intervals eight units of the half sprockets 94, 94,... on and along the outer circumferential surface of the circumferential portion 41a. Each half sprocket 94 has a base plate 96 welded to the bottom side thereof and is attached detachably, via this base plate 96, to the circumferential side surface of the circular frame portion 41a. More specifically, for example, a hole is made in each of both end portions of the base plate 96 and the circumferential frame portion 41a is provided with a through hole at each location thereon coinciding with the foregoing hole. Then, a bolt 97 is inserted through these holes and fastened with a nut 98 to hold the half sprocket 94 securely in place. (See Figs. 28 and 29.)

Thus, as shown in Fig. 25, the chain 93 is stretched around a pair of the sprockets 91, 91 facing each other diagonally for direct engagement therewith and further around the eight half sprockets 94, 94,... so as to be engaged with six of them including three on the left half of the circumferential frame portion 41a and other three on the right half of said frame portion 41a, which two groups of the half sprockets are disposed in a symmetrical relation with each other and engaged with the chain 93 for an even engagement between the two groups. In this case, preferrably an elongated arc-like chain receiver 94 is provided so as to be located below the chain 93 and between any two neighboring half sprockets 94, 94 disposed on and along the circumferential frame portion 41a as shown in the drawings, so that a hang-down of the chain between the neighboring two half sprockets 94, 94 which occurs when the chain is slackened can be prevented.

Operation of the foregoing carrier device A will now be explained.

When the motors 47 for the pair of the driving gears 46 are operated, the pair of the sprockets 91, 91 are driven via the decelerators 48 and rotated to drive the chain kept in engagement therewith and rotate the same. Since the chain 93 is kept in engagement with most of a plurality of the half sprockets 94, 94,... disposed on and along the circumferential side surface of the circumferential frame portion 41a of the circular supporting base 41, a powerful rotational movement can be given to the circular supporting base 41 through the chain 93 being operated to rotate as above. The rotational movement provided by this chain-sprocket drive system is advantageous in that, even when the circular supporting base 41 arranged to be driven by a plurality of the driving wheels 40 as in the case of the foregoing embodiment example is equipped with various devices and equipment to result in a remarkable increase in its overall weight, it is free from a slipping trouble that could otherwise occur between the wheels 40 and the circular supporting base and thus provides the circular supporting base 41 with the secure, slipless rotational movement.

When the circular supporting base 41 is rotated by the foregoing wheel-drive or chain-drive system, the circular supporting base 41 tends to positionally deviate somewhat in the horizontal direction, so that it is desired to avoid this tendency.

Still another aspect of the present invention is to provide a carrier device which is free from such an inconvenience. In this carrier device, a plurality of guide wheels are disposed on the enclosing frame base 4a in such a way that they may come in contact with the circumferential side surface of the circumferential portion 41a of the circular supporting base 41.

Thus, when the circular supporting base 41 is rotating, its tendency to deviate positionally in the horizontal direction is kept controlled by these guide wheels in order for it to give the predetermined regular rotation. Preferably, at least three guide wheels are disposed at equal spaces in such a way that the circumferential portion 41a of the circular supporting base 41 may be supported by them from outside at three points.

Next, an embodiment example of the foregoing aspect of the present invention will be explained with reference to Figs. 31 through 34.

Fig. 31 relates to a carrier device A having the same construction as the foregoing chain-drive type carrier device A except for the following aspect. It is different in that it is equipped with a preventive device designed to prevent said positional deviations of the circular supporting base 41, wherein each guide wheel 99 is provided rotatably at the halfway portion of the frame member 43 on one or another of the four sides of the square enclosing frame base 4a through a supporting cage 100 provided there to support the guide wheel 99 rotatably and these four guide wheels 99, 99, 99, 99 so disposed as above come in contact with the circumferential side surface of the circumferential portion 41a of the circular supporting base 41 so as to have the circular supporting base 41 rotatably held in place thereby from all sides, front, rear, left and right.

In other words, when the circular supporting base 41 is rotating, its tendency to slightly deviate in the horizontal direction is controlled by the guide wheels 99 disposed outside on the front, the rear, the left and the right thereof so that the base 41 may be kept guided by them for rotating along a truly circular track. 101 denotes a bearing which supports the shaft of the guide wheel 99 rotatably.

As mentioned in the foregoing, the horizontal positional deviation of the circular supporting base that can occur during the rotation movement thereof is prevented by these guide wheels 99 disposed as described above.

## Claims

1. A fermentative treatment apparatus characterized in that it comprises a carrier (4) provided with an enclosing frame base (4a) and so provided as to span a pit (3) of an elongated fermentative treatment pen (2) and travel back and forth in the longitudinal direction thereof, a rotatable frame (10) so mounted on the enclosing frame base of the carrier (4) as to be rotatable thereon, an agitation device (11) so attached to the rotatable frame (1) as to take a position corresponding to one widthwise half portion of the pit (3) and an organic waste spreader device (12) so attached alongside of the agitation device (11), to said frame (10) as to take another position corresponding to the other widthwise half portion of the pit (3).

2. A fermentative treatment apparatus as claimed in claim 1, wherein the frame (10) is provided with wheels (10a) which are so disposed as to be placed on a circular track (9) fixedly attached to the enclosing frame base (4a) and rotate therealong.

3. A fermentative treatment apparatus as claimed in claim 1, or 2 wherein a deodorization device (3) is additionally provided before or after where the agitation device (11) and the spreader device (12) are provided side by side.

4. A fermentative treatment apparatus as claimed in claim 3, wherein the deodorization device (30) comprises a hood (32), a deodorization box (33) containing a deodorant packed layer (38), a conduit (34) connecting the hood (32) to the deodorization box (33) and a suction device (35) interposed in the conduit (34), and the hood (32) is positioned to abut on the agitation device (11).

5. A fermentative treatment apparatus as claimed in claim 4, wherein the deodorization box (33) has in the inside thereof a permeable rack (37) provided horizontally to support the deodorant packed layer (38) thereon and a lower space (36) provided below the permeable rack (37) and communicating with the conduit (34) while a drain device (39) is provided in the bottom wall of the deodorization box.

6. A fermentative treatment apparatus as claimed in claim 4 or claim 5, wherein the hood (32) and the deodorization box (33) are provided side by side in the close vicinity before or after where the agitation device (11) and the spreader device (12) attached to the frame (10) side by side are located, the hood (32) being located specifically by the side of the agitation device (11) and the deodorization box (33) by the side of the spreader device (12).

7. A fermentative treatment apparatus as claimed in claim 1 or claim 3, wherein the carrier (4) comprises an enclosing frame base (4a) broad enough to exted over and beyond pit walls (2a) on both sides of the elongated fermentative treatment pen (2) and supporting legs (5) at front left and right and rear left and right side portions of the frame base (4a), and front left and right and rear left and right wheels (5a) attached to the supporting legs are such that they may be placed on the surface of floor (6) outside of each of the pit walls (2a) on both sides of the elongated fermentative treatment pen (2) and moved thereon for a back-and-forth travel of the carrier along the pit walls (2a).

8. A fermentative treatment apparatus as claimed in claim 7, wherein the front left and right and the rear left and right wheels (5a) attached to the supporting legs (5) of the carrier (4) are so arranged that they may be placed on rails (29), (29) laid on the surfaces of floors (6), (6) outside of the pit walls (2a) on both sides of the elongated fermentative treatment pen (2) and moved along both the pit walls (2a).

9. A carrier device for a fermentative treatment apparatus characterized in that it comprises a carrier (4) comprising an enclosing frame base (4a) provided with travel wheels (5a) disposed on both sides thereof and further provided with a plurality of driving wheels (40) disposed circumferentially in the inner space thereof, and a circular supporting base (41) which supports at least an agitation device (11) and whose circumferential portion (41a) is mounted on the foregoing driving wheels (40) disposed circumferentially.

10. A carrier device for a fermentative treatment apparatus as claimed in claim 9, wherein the circular supporting base (41) comprises a circular frame-like circumferential portion (41a) and a plurality of supporting frame members (50) integrally attached to the circumferential portion or frame (41a) in such a way as to intersect the space inside of the circumferential frame (41a) longitudinally and latitudinally.

11. A carrier device for a fermentative treatment apparatus as claimed in claim 9 or claim 10, wherein there are further provided on the circular supporting base (41) a suction device (35) connected to a hood (32) opening in the close vicinity of an agitator (11a) of the agitation device (11), and a deodorization device (30).

12. A carrier device for a fermentative treatment apparatus as claimed in claim 9, cliam 10 or claim 11, wherein the circular supporting base (41) has the agitation device (11) so attached thereto as to be located on one side portion of the inner space therein and the spreader device (12) located on the other side portion.

13. A carrier device for a fermentative treatment apparatus as claimed in claim 9, claim 10, claim 11 or claim 12, wherein the agitator (11a) of the agitation device (11) attached to the circular supporting base (41) is a horizontal rotary type agitator (11a) and there is additionally provided in the rear of the agitator (11a) a conveyor (71) for conveying waste materials to be treated which is installed there in such a way that it may rise higher toward the rear end thereof.

14. A carrier device for a fermentative treatment apparatus as claimed in any one of claims 9 through 13, wherein the enclosing frame base (4a) of the carrier (4) is made to have a width greater than the predetermined one of the fermentative treatment pen (2) or that between the outer surfaces of the pit walls (2a), (2a) on both sides of the pen and both side frame members (43), (43) are provided with supporting legs (5) which have wheels (5a) attached thereto and stand taller than the pit walls (2a) (2a) on both sides of the pen.

15. A fermentative treatment apparatus characterized in that it comprises the carrier device claimed in any one of claims 9 through 13 and further arranged to travel back and forth along the pit walls (2a), (2a) on both sides of the pen and turn the circular supporting base (41) by 180° at the end of each forward or rearward travel, and a conveyor (86) for supplying the waste materials to be treated which is installed above the lengthwise halfway portion of the pit (3) formed between the pit walls (2a), (2a).

16. A fermentative treatment apparatus as claimed in claim 15, wherein the carrier device (A) claimed in any one of claims 9 through 13 is arranged to travel back and forth on rails laid on the pit walls (2a), (2a) erected on both sides of the fermentative treatment pen (2) or (B) to extend in the lengthwise direction of said pen.

17. A fermentative treatment apparatus as claimed in claim 15, wherein the carrier device A claimed in claim 14 is arranged such that it may extend over and beyond the pit walls on both sides of the prescribed fermentative pen (2) or (B) so as to have the supporting legs (5) on both sides thereof placed on the floor surface (6) and can travel back and forth along the outer surfaces of the pit walls (2a) on both sides of the pen.

18. A fermentative treatment apparatus as claimed in claim 17, wherein the rail 82 is laid on the floor surface (6) and along the outer surface of each of the pit walls (2a), (2a) on both sides of the pen.

19. A fermentative treatment apparatus as claimed in claim 15, claim 17 or claim 18, wherein the pit walls (2a), (2a) on both sides of the fermentative treatment pen (B) are constructed of an assembly of formed boards (90).

20. A fermentative treatment apparatus as claimed in claim 17, claim 18 or claim 19, wherein each of the pit walls (2a), (2a) on both sides of the fermentative treatment pen (2) is constructed by erecting at regular intervals a plurality of supporting columns (87) each provided with a fitting channel (87a) on each of both sides thereof and fitting at least one formed wall board (90) in the fitting channels (87a), (87a) of each two neighboring and mutally facing supporting columns (87), (87).

21. A fermentative treatment apparatus as claimed in any one of claims 17 through 20, wherein the formed wall board (90) is a formed synthetic resin wall board or a heat-insulating type formed wall board.

22. A fermentative treatment apparatus as claimed in any one of claims 15 through 21, wherein the fermentative treatment pen (B) is formed of both side pit walls only and a pit (3) formed therebetween has at least one end thereof left open as an open-end side (3a).

23. A carrier device for a fermentative treatment apparatus characterized in that a sprocket (91) driven by a driving gears (46) is provided outside of the circular supporting base (41) while a plurality of teeth (92) are disposed on the circumferential portion (41a) of a circular supporting base (41), and a chain (93) is stretched around the sprocket (91) and the circumferential portion (41a) of the circular supporting base (41) so as to have the teeth (92) engaged therewith to chain-drive the circular supporting base.

24. A carrier device for a fermentative treatment apparatus as claimed in claim 23, wherein a pair of sprockets (91) and (91) repsectively driven by the driving gears (46) and (46) are provided so as to face each other outside of the circular supporting base (41), and the chain (93) is streched around these sprockets (91) and (91) and the toothed circumferential portion (41a) of the circular supporting base (41).

25. A carrier device for a fermentative treatment apparatus as claimed in claim 23 or claim 24, wherein a plurality of half sprockets (94) are disposed at equal spaces on the circumferential side surface of the circumferential portion (41a) of the circular supporting base (41) and the chain (93) is stretched around them to have their teeth (92) engaged therewith.

26. A carrier device for a fermentative treatment apparatus as claimed in claim 23, claim 24 or claim 25, wherein a chain receiver (95) is provided outwardly on the circumferential side surface of the circumferential portion (41a) of the circular supporting base (41).

27. A carrier device for a fermentative treatment apparatus characterized in that a plurality of guide wheels (99) are disposed on the enclosing frame base (4a) in such a way that they may be in contact with the circumferential side surface of the circumferential portion (41a) of the circular supporting base (41).

28. A carrier device for a fermentative treatment apparatus as claimed in claim 27, wherein four guide wheels (99) are disposed on the enclosing frame base (4a) on all sides, front, rear, left and right, respectively.

FIG. 1

FIG. 2

FIG. 3

# FIG. 4

# FIG. 5

EP 0 424 711 A2

FIG. 6

FIG. 7

FIG. 8

FIG. 9

# FIG. 10

# FIG. 11

# FIG. 12A

# FIG. 12B

# FIG. 13

# FIG. 14

# FIG. 15

EP 0 424 711 A2

FIG. 16

FIG. 17

FIG. 18

34

# FIG. 19

46

47

48

41a

42

49

45

40

# FIG. 20

30

33

34

39a

39b    39

50

36

# FIG. 21

EP 0 424 711 A2

FIG. 22

EP 0 424 711 A2

# FIG. 23

# FIG. 24

# FIG. 25

FIG. 26

# FIG. 27

95
92
94
41a
44
47
95
46
93
91
48 42

# FIG. 28

93    91    41a
95
48
47
46
45    45    42

# FIG. 29

# FIG. 30

# FIG. 31

# FIG. 32

# FIG. 33

# FIG. 34